(19) Europäisches Patentamt
European Patent Office
Office européen des brevets

(11) **EP 4 210 391 A1**

(12) **EUROPEAN PATENT APPLICATION**
published in accordance with Art. 153(4) EPC

(43) Date of publication:
**12.07.2023 Bulletin 2023/28**

(21) Application number: **20955668.7**

(22) Date of filing: **30.09.2020**

(51) International Patent Classification (IPC):
**H04W 36/08** (2009.01)　　**H04W 68/02** (2009.01)

(52) Cooperative Patent Classification (CPC):
**H04W 36/08; H04W 68/02**

(86) International application number:
**PCT/CN2020/119320**

(87) International publication number:
**WO 2022/067643 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LI, Yongcui**
**Shenzhen, Guangdong 518129 (CN)**

• **PAN, Qi**
**Shenzhen, Guangdong 518129 (CN)**
• **ZHU, Fangyuan**
**Shenzhen, Guangdong 518129 (CN)**
• **SUN, Haiyang**
**Shenzhen, Guangdong 518129 (CN)**

(74) Representative: **Maiwald GmbH**
**Engineering**
**Elisenhof**
**Elisenstrasse 3**
**80335 München (DE)**

(54) **CELL SELECTION METHOD AND APPARATUS, AND PAGING METHOD AND APPARATUS**

(57)　　A cell selection method, a paging method, and an apparatus are provided. In the cell selection method in embodiments of this application, when performing cell selection, a terminal device not only considers a signal measurement result of a cell, but also considers cell selection assistance information of the terminal device. The cell selection assistance information includes identifiers of slices corresponding to one or more sessions and slice capability information of the cell. Cell selection or cell reselection is performed based on the measurement result of the cell and the cell selection assistance information, so that a cell selected by the terminal can support a slice corresponding to a session as much as possible, thereby ensuring service continuity.

FIG. 4

**Description**

**TECHNICAL FIELD**

This application relates to the field of communication technologies, and in particular, to a cell selection method, a paging method, and an apparatus.

**BACKGROUND**

When a terminal is in idle mode, the terminal needs to perform cell selection or cell reselection, to camp on a cell with a higher priority or better channel quality. In idle mode, the terminal triggers the cell selection or the cell reselection by monitoring signal measurement results of a serving cell and a neighboring cell. Core content of cell selection or reselection criteria is: If a cell with better channel quality than the serving cell exists, and the cell with better channel quality keeps better channel quality in a period of time, the cell with better channel quality is to be selected or reselected.

Currently, a network system architecture is increasingly complex, and performing cell selection or cell reselection only based on a signal measurement result is inapplicable to this increasingly complex network system architecture. Therefore, a corresponding solution is urgently needed, so that the terminal selects a suitable cell as much as possible.

**SUMMARY**

This application provides a cell selection method, a paging method, and an apparatus, to perform cell selection based on cell selection assistance information from a radio access network device, so as to avoid that a cell selected by a terminal device does not support a slice corresponding to a session.

According to a first aspect, a cell selection method is provided. The method includes: obtaining measurement results of N cells; obtaining cell selection assistance information; and performing cell selection or cell reselection based on the measurement results of the N cells and the cell selection assistance information.

A possible manner of obtaining the measurement results of the N cells is: performing cell measurement to obtain the measurement results of the N cells. Another possible manner is receiving an indication from a source radio access network device in a handover process, where the indication includes the measurement results of the N cells.

There may be following two cases for content of the cell selection assistance information: In a first possible case, the cell selection assistance information includes identifiers of L slices corresponding to M sessions of a terminal device and slice capability information of the N cells. The slice capability information of the N cells includes identifiers of slices respectively supported by the N cells, and M, L, and N are positive integers. In a second possible case, the cell selection assistance information includes identifiers of L slices corresponding to M sessions of a terminal device and slice capability information of K radio access network devices. The slice capability information of the K radio access network devices includes identifiers of slices separately supported by the K radio access network devices.

In this embodiment of this application, a cell more suitable for the terminal device to camp on may be selected based on the cell selection assistance information and signal measurement results. In this way, a cell selected to be camped on may be most likely to support a slice corresponding to a session, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, when the cell selection assistance information meets the first possible case, a specific method for performing cell selection or cell reselection based on the measurement results of the N cells and the cell selection assistance information includes: determining, based on the measurement results of the N cells, a candidate target cell for the cell selection or the cell reselection; and selecting, from the candidate target cell based on the cell selection assistance information, a target cell supporting the L slices.

In this embodiment of this application, the terminal filters cells based on the cell selection assistance information, to filter out a cell that supports a slice corresponding to a session, so that the terminal device camps on a suitable cell, thereby avoiding service discontinuity.

In a possible embodiment, when the cell selection assistance information meets the second possible case, a specific method for performing cell selection or cell reselection based on the measurement results of the N cells and the cell selection assistance information includes: determining, based on the measurement results of the N cells, a candidate target radio access network device for the cell selection or the cell reselection; and selecting, from the candidate target radio access network device based on the cell selection assistance information, a target radio access network device supporting the L slices.

In this embodiment of this application, radio access network devices are filtered based on the cell selection assistance information, so that a radio access network device that supports a slice corresponding to a session of the terminal device is filtered out, so that the terminal device camps on a suitable cell, thereby avoiding service discontinuity.

In a possible embodiment, when the cell selection assistance information meets the first possible case, the selecting, from the candidate target cell based on the cell selection assistance information, a target cell supporting the L slices includes:

determining whether the target cell supporting the L slices exists in the candidate target cell; and if the target cell exists, selecting the target cell; or otherwise, in a manner 1, selecting a target cell supporting a first slice from the candidate target cell based on the cell selection assistance information and priorities of the L slices, where the first slice is a slice with a highest priority in the L slices, or in a manner 2, selecting, from the candidate target cell based on the cell selection assistance information and a quantity of intersections between slices supported by each cell and the L slices, a target cell with a largest quantity of intersections.

In this embodiment of this application, according to the foregoing method, it can be ensured that a cell on which the terminal device camps can be most likely to support a slice corresponding to a session, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, when the cell selection assistance information meets the second possible case, the selecting, from the candidate target radio access network device based on the cell selection assistance information, a target radio access network device supporting the L slices includes:

determining whether the target radio access network device supporting the L slices exists in the candidate target radio access network device; and if the target radio access network device exists, selecting the target radio access network device; or otherwise, in a manner 1, selecting a target radio access network device supporting a first slice from the candidate target radio access network device based on the cell selection assistance information and priorities of the L slices, where the first slice is a slice with a highest priority in the L slices, or in a manner 2, selecting, from the candidate target radio access network device based on the cell selection assistance information and a quantity of intersections between slices supported by each cell and the L slices, a target radio access network device with a largest quantity of intersections.

In this embodiment of this application, according to the foregoing method, it can be ensured that a cell of a radio access network device that the terminal device selects to access can be most likely to support a slice corresponding to a session, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, the method further includes: obtaining the priorities of the L slices based on preconfigured information; obtaining the priorities of the L slices from a network device side in a network registration process; or obtaining the priorities of the L slices from a network device side in a process of establishing the M sessions, that is, in a process of establishing each session, obtaining a priority of a slice corresponding to the session from a network device side, and obtaining the priorities of the L slices of the M sessions.

In this embodiment of this application, with reference to a priority of a slice, it can be ensured, at a maximum probability, that the terminal device camps on a suitable cell, to ensure service continuity.

According to a second aspect, an embodiment of this application further provides a cell selection method. The method includes: obtaining measurement results of N cells; obtaining cell selection assistance information; and performing cell selection or cell reselection based on the measurement results of the N cells and the cell selection assistance information.

A possible manner of obtaining the measurement results of the N cells is: performing cell measurement to obtain the measurement results of the N cells. Another possible manner is receiving an indication from a source radio access network device in a handover process, where the indication includes the measurement results of the N cells.

There may be following two cases for content of the cell selection assistance information: In a first possible case, the cell selection assistance information includes slice capability information of the N cells and allowed slice selection assistance information. The slice capability information of the N cells includes identifiers of slices respectively supported by the N cells. The allowed slice selection assistance information is an identifier of a slice that allows the terminal device to access. In a second possible case, the cell selection assistance information includes slice capability information of K radio access network devices and allowed slice selection assistance information. The slice capability information of the K radio access network devices includes identifiers of slices respectively supported by the K radio access network devices.

In this embodiment of this application, the allowed slice selection assistance information is the identifier of the slice that allows the terminal device to access. The cell selection assistance information is mainly used by the terminal to determine a cell selection target preference when the terminal device performs the cell selection or the cell reselection. A cell more suitable for the terminal device to camp on may be selected based on the cell selection assistance information and signal measurement results. In this way, a cell selected to be camped on may be most likely to support a slice corresponding to a session, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, when the cell selection assistance information meets the first possible case, a specific method for performing cell selection or cell reselection based on the measurement results of the N cells and the cell selection assistance information includes: determining, based on the measurement results of the N cells, a candidate target cell for the cell selection or the cell reselection; and selecting, from the candidate target cell based on the cell selection assistance information, a target cell supporting the slice that allows the terminal device to access.

In this embodiment of this application, cells are filtered based on the cell selection assistance information, to filter out a cell supporting the slice that allows the terminal device to access, so that the terminal device camps on a suitable cell, thereby avoiding service discontinuity.

In a possible embodiment, when the cell selection assistance information meets the second possible case, a specific method for performing cell selection or cell reselection based on the measurement results of the N cells and the cell selection assistance information includes: determining, based on the measurement results of the N cells, a candidate target radio access network device for the cell selection or the cell reselection; and selecting, from the candidate target radio access network device based on the cell selection assistance information, a target radio access network device supporting the slice that allows the terminal device to access.

In a possible embodiment, when the cell selection assistance information meets the first possible case, the selecting, from the candidate target cell based on the cell selection assistance information, a target cell supporting the slice that allows the terminal device to access includes:
determining whether the target cell supporting the slice that allows the terminal device to access exists in the candidate target cell; and if the target cell exists, selecting the target cell; or otherwise, in a manner 1, selecting a target cell supporting a first slice from the candidate target cell based on the cell selection assistance information and a priority of the slice that allows the terminal device to access, where the first slice is a slice with a highest priority in the slice that allows the terminal device to access, or in a manner 2, selecting, from the candidate target cell based on the cell selection assistance information and a quantity of intersections between slices supported by each cell and the slice that allows the terminal device to access, a target cell with a largest quantity of intersections.

In this embodiment of this application, according to the foregoing method, it can be ensured that a cell on which the terminal device selects to camp can be most likely to support a slice that allows the terminal device to access, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, when the cell selection assistance information meets the second possible case, the selecting, from the candidate target radio access network device based on the cell selection assistance information, a target radio access network device supporting the slice that allows the terminal device to access includes:
determining whether the target radio access network device supporting the slice that allows the terminal device to access exists in the candidate target radio access network device; and if the target radio access network device exists, selecting the target radio access network device; or otherwise, in a manner 1, selecting a target radio access network device supporting a first slice from the candidate target radio access network device based on the cell selection assistance information and a priority of the slice that allows the terminal device to access, where the first slice is a slice with a highest priority in the slice that allows the terminal device to access, or in a manner 2, selecting, from the candidate target radio access network device based on the cell selection assistance information and a quantity of intersections between slices supported by each cell and the slice that allows the terminal device to access, a target radio access network device with a largest quantity of intersections.

In this embodiment of this application, according to the foregoing method, it can be ensured that a cell of a radio access network device that the terminal device selects to access can be most likely to support the slice that allows the terminal device to access, and therefore normal transmission of a service can be ensured at a maximum probability. Compared with the current technologies, this solution can avoid, to some extent, a problem of service discontinuity caused by cell handover, so that cell resources are fully and properly used as much as possible.

In a possible embodiment, the method further includes: obtaining, based on preconfigured information, a priority of the slice that allows the terminal device to access; or obtaining, from a network device side in a network registration process, a priority of the slice that allows the terminal device to access.

In this embodiment of this application, with reference to a priority of a slice, it can be ensured, at a maximum probability, that the terminal device camps on a suitable cell, to ensure service continuity.

According to a third aspect, a paging method is provided. The method includes: obtaining first slice information, where the first slice information indicates slices supported by K radio access network devices, and K is a positive integer; obtaining second slice information, where the second slice information indicates a slice associated with a session of to-be-sent downlink data; determining a target radio access network device set from the K radio access network devices based on the first slice information and the second slice information, where a radio access network device in the target radio access network device set supports the slice indicated by the second slice information; and sending a paging message to the target radio access network device set.

In this embodiment of this application, the K radio access network devices are filtered based on the first slice information and the second slice information, to filter out the target radio access network device set. Because the target radio access network device set supports a slice corresponding to a session of a terminal device, signaling can be reduced, a signaling transmission path can be reduced, and complexity of a paging process can be reduced.

In a possible embodiment, a manner of obtaining the first slice information may be: receiving identifiers of the slices from the K radio access network devices; and then determining, by the terminal device, the first slice information based on the identifiers of the slices.

In a possible embodiment, a manner of obtaining the second slice information may be: receiving an identifier of a slice from a session management function network element; and then determining the second slice information based on the identifier of the slice.

In a possible embodiment, a manner of obtaining the second slice information may be: receiving, from a session management function network element, an identifier of a session of to-be sent downlink data; and determining the second slice information based on a slice corresponding to the identifier of the session of the to-be sent downlink data.

In a possible embodiment, the first slice information indicates slices supported by N cells of the K radio access network devices, K and N are positive integers, and the determining a target radio access network device set from the K radio access network devices based on the first slice information and the second slice information includes: determining a target cell set in the target radio access network device set from the N cells of the K radio access network devices based on the first slice information and the second slice information, where the paging message includes an identifier of a target cell in the target cell set.

In this embodiment of this application, the target cell set may be filtered out according to the foregoing method, so that the terminal device can be paged in the target cell set, and signaling overheads can be reduced.

According to a fourth aspect, another paging method is provided. The method includes:

obtaining first slice information, where the first slice information indicates slices supported by N cells, and N is a positive integer;
obtaining second slice information, where the second slice information indicates a slice associated with a session of to-be sent downlink data;
determining a target cell set from the N cells based on the first slice information and the second slice information, where the target cell set includes a target cell supporting the slice indicated by the second slice information; and
sending a paging message to a radio access network device corresponding to the target cell set, where the paging message includes an identifier of the target cell in the target cell set.

In this embodiment of this application, cells are filtered based on the first slice information and the second slice information, to filter out the target cell set. Because the target cell set supports a slice corresponding to a session of a terminal device, signaling can be reduced, a signaling transmission path can be reduced, and complexity of a paging process can be reduced.

According to a fifth aspect, a paging method is provided. The method includes:

obtaining a first data notification message, where the first data notification message indicates that a first session of a terminal device has downlink data to be transmitted;
sending an identifier of the first session to an access and mobility management function network element, where the identifier of the first session is for paging the terminal device;
receiving, in a process of waiting for activation of a user plane connection of the terminal device, a second data notification message from a user plane function network element, where the second data notification message indicates that a second session of the terminal device has downlink data to be transmitted;
determining that a priority of a slice corresponding to the second session is higher than a priority of a slice corresponding to the first session; and
sending an identifier of the second session to the access and mobility management function network element, where the identifier of the second session is for paging the terminal device.

In this embodiment of this application, according to the foregoing method, in a user plane connection activation process of the terminal device, the access and mobility management function network element can be indicated to initiate paging only when a priority of a slice of received downlink data is higher. This can further reduce signaling overheads, and can also ensure that the terminal device is paged in time.

In a possible embodiment, when it is determined that the priority of the slice corresponding to the second session is lower than or equal to the priority of the slice corresponding to the first session, no response is made. In this way, the signaling overheads can be reduced.

According to a sixth aspect, this application provides a first communication apparatus. The apparatus has a function of implementing the embodiment of the first aspect or the second aspect. The function may be implemented by using hardware, or may be implemented by hardware by executing corresponding software. The hardware or the software includes one or more modules corresponding to the function.

In a possible design, the apparatus includes a transceiver unit, and optionally further includes a processing unit. The processing unit may be, for example, a processor. A receiving unit may be, for example, a receiver. A sending unit may be, for example, a transmitter. The receiver and the transmitter include a radio frequency circuit. Optionally, the apparatus further includes a storage unit, and the storage unit may be, for example, a memory. When the apparatus includes the storage unit, the storage unit stores computer-executable instructions. The processing unit is connected to the storage unit, and the processing unit executes the computer-executable instructions stored in the storage unit, to enable the apparatus to perform the method according to any implementation of the first aspect or the second aspect.

In another possible design, the apparatus is a chip. The chip includes a receiving unit and a sending unit, and optionally further includes a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute computer-executable instructions stored in the storage unit, so that the sending method according to any implementation of the first aspect or the second aspect is performed. Optionally, the storage unit is a storage unit in the chip, for example, a register or a cache. The storage unit may alternatively be a storage unit located outside the chip in the terminal, for example, a read-only memory (read-only memory, ROM), another type of static storage device capable of storing static information and instructions, or a random access memory (random access memory, RAM).

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the method according to the first aspect or the second aspect.

According to a seventh aspect, this application provides a second communication apparatus. The apparatus has a function of implementing the embodiment of the third aspect or the fourth aspect. The function may be implemented by using hardware, or may be implemented by hardware by executing corresponding software. The hardware or the software includes one or more modules corresponding to the function.

In a possible design, the apparatus includes a transceiver unit, and optionally further includes a processing unit. The processing unit may be, for example, a processor. A receiving unit may be, for example, a receiver. A sending unit may be, for example, a transmitter. The receiver and the transmitter include a radio frequency circuit. Optionally, the apparatus further includes a storage unit, and the storage unit may be, for example, a memory. When the apparatus includes the storage unit, the storage unit stores computer-executable instructions. The processing unit is connected to the storage unit, and the processing unit executes the computer-executable instructions stored in the storage unit, to enable an access and mobility management function network element to perform the method according to any implementation of the third aspect or the fourth aspect.

In another possible design, the apparatus is a chip. The chip includes a receiving unit and a sending unit, and optionally further includes a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute the computer-executable instructions stored in the storage unit, so that the sending method according to any implementation of the third aspect or the fourth aspect is performed. Optionally, the storage unit is a storage unit in the chip, for example, a register or a cache. The storage unit may alternatively be a storage unit located outside the chip in the terminal, for example, a read-only memory (read-only memory, ROM), another type of static storage device capable of storing static information and instructions, or a random access memory (random access memory, RAM).

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the method according to the third aspect or the fourth aspect.

According to an eighth aspect, this application provides a third communication apparatus. The apparatus has a function for implementing each embodiment of the fifth aspect. The function may be implemented by using hardware, or may be implemented by hardware by executing corresponding software. The hardware or the software includes one or more modules corresponding to the function.

In a possible design, the apparatus includes a transceiver unit, and optionally further includes a processing unit. The processing unit may be, for example, a processor. A receiving unit may be, for example, a receiver. A sending unit may be, for example, a transmitter. The receiver and the transmitter include a radio frequency circuit. Optionally, the apparatus further includes a storage unit, and the storage unit may be, for example, a memory. When the apparatus includes the storage unit, the storage unit stores computer-executable instructions. The processing unit is connected to the storage unit, and the processing unit executes the computer-executable instructions stored in the storage unit, to enable a session management function network element to perform the method according to any implementation of the fifth aspect.

In another possible design, the apparatus is a chip. The chip includes a receiving unit and a sending unit, and optionally further includes a processing unit. The processing unit may be, for example, a processing circuit. The receiving unit may be, for example, an input interface, a pin, a circuit, or the like. The sending unit may be, for example, an output interface, a pin, a circuit, or the like. The processing unit may execute computer-executable instructions stored in a storage unit, so that the sending method according to any implementation of the fifth aspect is performed. Optionally, the storage unit is a storage unit in the chip, for example, a register or a cache. The storage unit may alternatively be a storage unit located outside the chip in the terminal, for example, a read-only memory (read-only memory, ROM), another type of static storage device capable of storing static information and instructions, or a random access memory (random access memory, RAM).

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the method according to the fifth aspect.

According to a ninth aspect, an embodiment of this application provides a chip system. The chip system includes a processor, and may further include a memory, configured to implement the method in any design example of the first aspect or the second aspect or an operation performed by a first communication apparatus. The chip system may include a chip, or may include a chip and another discrete component.

According to a tenth aspect, an embodiment of this application provides a chip system. The chip system includes a processor, and may further include a memory, configured to implement the method in any design example of the third aspect or the fourth aspect or an operation performed by a second communication apparatus. The chip system may include a chip, or may include a chip and another discrete component.

According to an eleventh aspect, an embodiment of this application provides a chip system. The chip system includes a processor, and may further include a memory, to implement the method in any design example of the fifth aspect or an operation performed by a third communication apparatus. The chip system may include a chip, or may include a chip and another discrete component.

According to a twelfth aspect, this application provides a communication system, including any communication apparatus according to the sixth aspect to the eighth aspect.

According to a thirteenth aspect, an embodiment of this application further provides a computer-readable storage medium. The storage medium stores a computer program or instructions. When the computer program or the instructions are executed, the method in any design example of the first aspect may be implemented.

According to a fourteenth aspect, an embodiment of this application further provides a computer-readable storage medium. The storage medium stores a computer program or instructions. When the computer program or the instructions are executed, the method in any design example of the second aspect may be implemented.

According to a fifteenth aspect, an embodiment of this application further provides a computer-readable storage medium. The storage medium stores a computer program or instructions. When the computer program or the instructions are executed, the method in any design example of the third aspect may be implemented.

According to a sixteenth aspect, an embodiment of this application further provides a computer-readable storage medium. The storage medium stores a computer program or instructions. When the computer program or the instructions are executed, the method in any design example of the fourth aspect may be implemented.

According to a seventeenth aspect, an embodiment of this application further provides a computer-readable storage medium. The storage medium stores a computer program or instructions. When the computer program or the instructions are executed, the method in any design example of the fifth aspect may be implemented.

According to an eighteenth aspect, an embodiment of this application further provides a computer program product, including instructions. When the computer program product runs on a computer, the computer is enabled to perform the method in any design example in the first aspect or the second aspect.

According to a nineteenth aspect, an embodiment of this application further provides a computer program product, including instructions. When the computer program product runs on a computer, the computer is enabled to perform the method in any design example in the third aspect or the fourth aspect.

According to a twentieth aspect, an embodiment of this application further provides a computer program product, including instructions. When the computer program product runs on a computer, the computer is enabled to perform the method in any design example in the fifth aspect.

In addition, for technical effects brought by any design manner in the sixth aspect to the twentieth aspect, refer to the technical effects brought by different design manners in the first aspect to the fifth aspect. Details are not described herein again.

## BRIEF DESCRIPTION OF DRAWINGS

FIG. 1A and FIG. 1B are a schematic diagram of a communication system according to an embodiment of this application;
FIG. 2 is a schematic diagram of a cell applicable to an embodiment of this application;
FIG. 3 is a schematic diagram of a communication scenario according to an embodiment of this application;
FIG. 4 is a schematic flowchart of a cell selection method according to an embodiment of this application;
FIG. 5 is a schematic flowchart of a paging method according to an embodiment of this application;
FIG. 6 is a schematic diagram of another communication scenario according to an embodiment of this application;
FIG. 7 is a schematic flowchart of another paging method according to an embodiment of this application;
FIG. 8 is a schematic structural diagram of a first communication apparatus according to an embodiment of this application;
FIG. 9 is a schematic structural diagram of a second communication apparatus according to an embodiment of this application;
FIG. 10 is a schematic structural diagram of a third communication apparatus according to an embodiment of this application; and
FIG. 11 is a schematic structural diagram of a communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a future communication system, or another similar communication system.

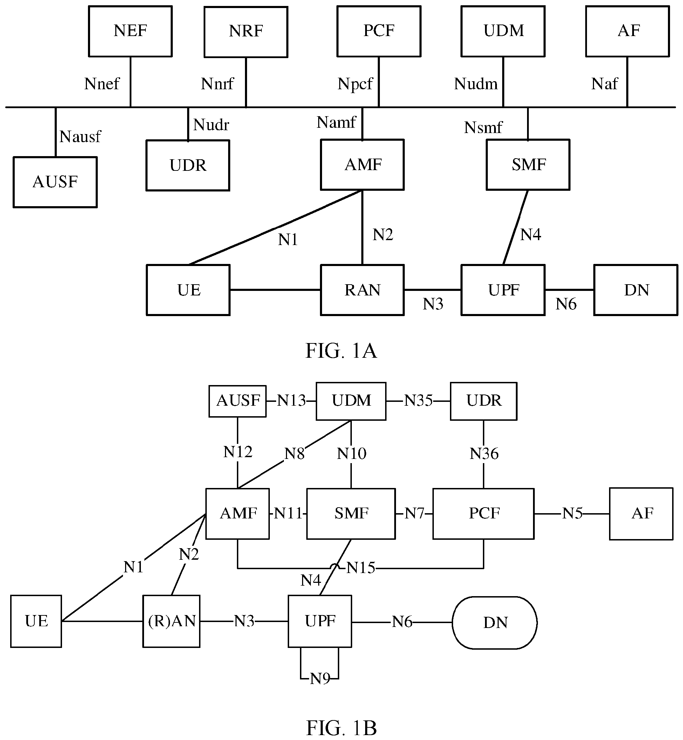

FIG. 1A is a schematic diagram of a 5th generation (5th generation, 5G) network architecture based on a service-oriented architecture. The 5G network architecture shown in FIG. 1A may include three parts: a terminal device, a data network (data network, DN), and a carrier network. The following briefly describes functions of some of the network elements.

The carrier network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, a network slice selection function (Network Slice Selection Function, NSSF) network element (not shown in the figure), and the like. In the foregoing carrier network, a part other than the radio access network may be referred to as a core network.

The terminal device (terminal device) is a device having a wireless transceiver function. The terminal device may be deployed on land, including an indoor device, an outdoor device, a handheld device, or a vehicle-mounted device; may be deployed on water (for example, on a ship); or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The terminal device may establish a connection to the carrier network through an interface (for example, N1) provided by the carrier network, and use services such as data and/or voice provided by the carrier network. The terminal device may further access a DN through the carrier network, and use a carrier service deployed on the DN and/or a service provided by a third party. The third party may be a service provider other than the carrier network and the terminal device, and may provide other services such as data and/or voice for the terminal device. A specific representation form of the third party may be specifically determined based on an actual application scenario, and is not limited herein.

The RAN is a subnet of the carrier network, and is an implementation system between a service node in the carrier network and the terminal device. To access the carrier network, the terminal device first passes through the RAN, and may be connected to the service node in the carrier network through the RAN. A RAN device is a device that provides a wireless communication function for the terminal device, and the RAN device is also referred to as an access network device. The RAN device includes but is not limited to: a next generation NodeB (gNodeB, gNB), an evolved NodeB (evolved NodeB, eNB), a radio network controller (radio network controller, RNC), a NodeB (NodeB, NB), abase station controller (base station controller, BSC), abase transceiver station (base transceiver station, BTS), a home base station (for example, a home evolved NodeB or a home NodeB, HNB), a baseband unit (baseBand unit, BBU), a transmission reception point (transmission reception point, TRP), a transmission point (transmission point, TP), a mobile switching center, and the like in 5G.

The AMF network element mainly performs functions such as mobility management and access authentication/authorization. In addition, the AMF network element is responsible for transferring a user policy between the UE and the PCF.

The SMF network element mainly performs functions such as session management, execution of a control policy delivered by the PCF, UPF selection, and UE internet protocol (internet protocol, IP) address assignment.

The UPF network element serves as an interface UPF connecting to the data network, and implements functions such as user plane data forwarding, charging statistics based on a session/flow level, and bandwidth throttling.

The UDM network element is mainly responsible for functions such as subscription data management and user access authorization.

The UDR is mainly responsible for a function of accessing subscription data, policy data, application data, and another type of data.

The NEF is mainly configured to support capability and event exposure.

The AF network element mainly transfers a requirement of an application side on a network side, for example, a quality of service (Quality of Service, QoS) requirement or user status event subscription. The AF may be a third-party functional entity, or may be an operator-deployed application service, for example, an IP multimedia subsystem (IP Multimedia Subsystem, IMS) voice call service.

The PCF network element is mainly responsible for policy control functions such as charging for a session level or a service flow level, QoS bandwidth guarantee, mobility management, and UE policy decision. In this architecture, PCFs connected to the AMF and the SMF are separately an AM PCF (PCF for Access and Mobility Control) and an SM PCF (PCF for Session Management). In an actual deployment scenario, the PCFs may not be a same PCF entity.

The NRF network element may be configured to provide a network element discovery function, and provide, based on a request from another network element, network element information corresponding to a network element type. The NRF further provides a network element management service, for example, registration, update, and deregistration of a network element and subscription and push of a network element status.

The AUSF network element is mainly responsible for authenticating a user, to determine whether the user or a device is allowed to access a network.

The NSSF network element is mainly configured to: select a network slice, count users on the network slice, and the like.

A DN is a network outside a carrier network. The carrier network may access a plurality of DNs. A plurality of services may be deployed in the DN, and the DN may provide services such as a data service and/or a voice service for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

It should be noted that, for different operators, corresponding public land mobile networks (public land mobile networks, PLMNs) are different. A PLMN is used to identify different mobile communication operators in a country or region. One or more public land mobile networks can form a service area. The PLMN is a network that is established and operated by a government or an operator authorized by the government, to provide land mobile communication services for the public. A PLMN is represented by a mobile country code and a mobile network code (Mobile Network Code, MNC). The MNC of China Mobile is 00, and the MNC of China Unicom is 01.

In FIG. 1A, Nausf, Nnef, Npcf, Nudm, Naf, Namf, Nsmf, N1, N2, N3, N4, and N6 are interface sequence numbers. These interface sequence numbers represent service-oriented interfaces. For meanings of these interface sequence numbers, refer to meanings defined in the 3rd generation partnership project (3rd generation partnership project, 3GPP) standard agreement. This is not limited herein.

FIG. 1B is a schematic diagram of a 5G network architecture based on a point-to-point interface. For descriptions of functions of network elements in FIG. 1B, refer to descriptions of functions of corresponding network elements in FIG. 1A. Details are not described again. A main difference between FIG. 1B and FIG. 1A lies in that interfaces between network elements in FIG. 1B are point-to-point interfaces rather than service-oriented interfaces.

In the architecture shown in FIG. 1B, names and functions of the interfaces between the network elements are as follows:

(1) N7 represents an interface between the PCF and the SMF, and may be configured to deliver control policies at a protocol data unit (protocol data unit, PDU) session granularity and a service data flow granularity.

(2) N15 represents an interface between the PCF and the AMF, and may be configured to deliver a UE policy and an access control related policy.

(3) N5 represents an interface between the AF and the PCF, and may be configured to deliver an application service request and report a network event.

(4) N4 represents an interface between the SMF and the UPF, and may be configured to transfer information between a control plane and a user plane, including delivery of forwarding rules, QoS control rules, traffic statistics rules, and the like from the control plane to the user plane, and reporting of user plane information.

(5) N11 represents an interface between the SMF and the AMF, and may be configured to: transfer PDU session tunnel information between the RAN and the UPF, transfer a control message to be sent to the UE, transfer radio resource control information to be sent to the RAN, and the like.

(6) N2 represents an interface between the AMF and the RAN, and may be configured to transfer radio bearer control information and the like from a core network side to the RAN.

(7) N1 represents an interface between the AMF and the UE, and may be configured to transfer the QoS control rules and the like to the UE.

(8) N8 represents an interface between the AMF and the UDM, and may be used by the AMF to obtain, from the UDM, subscription data and authentication data related to access and mobility management, and used by the AMF to register current mobility management related information of the UE with the UDM.

(9) N10 represents an interface between the SMF and the UDM, and may be used by the SMF to obtain, from the UDM, subscription data related to session management, and used by the SMF to register current session related information of the UE with the UDM.

(10) N35 represents an interface between the UDM and the UDR, and may be used by the UDM to obtain user subscription data information from the UDR.

(11) N36 represents an interface between the PCF and the UDR, and may be used by the PCF to obtain policy related subscription data and application data related information from the UDR.

(12) N12 represents an interface between the AMF and the AUSF, and may be used by the AMF to initiate an authentication process to the AUSF, where an SUCI may be carried as a subscription identifier.

(13) N13 represents an interface between the UDM and the AUSF, and may be used by the AUSF to obtain a user authentication vector from the UDM, to perform an authentication process.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, or may be jointly implemented by a plurality of devices, or may be one functional module in one device. This is not specifically limited in embodiments of this application. In actual deployment, the foregoing network elements may be co-deployed. For example, the mobility management network element may be co-deployed with the session management network element; the session management network element may be co-deployed with the user plane network element; and the network slice selection function network element, the policy control function network element, and the unified data management function network element may be co-deployed. When two network elements are co-deployed, interaction between the two network elements provided in embodiments of this application becomes an internal operation of the co-deployed network elements or may be omitted.

The access and mobility management function network element, the session management function network element, the policy control network element, the application function network element, the access network device, the network exposure function network element, the user plane function network element, and the network slice selection network element in this application may be respectively the AMF, the SMF, the PCF, the AF, the RAN, the NEF, the UPF, and the NSSF in FIG. 1A or FIG. 1B, or may be network elements that have functions of the AMF, the SMF, the PCF, the AF, the RAN, the NEF, the UPF, and the NSSF in future communication such as a 6th generation (6th generation, 6G) network. This is not limited in this application. For ease of description, in this application, an example in which the access and mobility management function network element, the session management function network element, the policy control network element, the application function network element, the access network device, the network exposure function network element, the user plane function network element, and the network slice selection network element are respectively the foregoing AMF, SMF, PCF, AF, RAN, NEF, UPF and NSSF is used for description. Further, in this application, an example in which the terminal device is the UE is used for description.

In the 5G era, hundreds of billions of internet of things devices access a network, different types of application scenarios have different requirements on the network, and requirements of some of the scenarios may even conflict. If a single network is used to provide services for different types of application scenarios, a network architecture is extremely complex, and network management efficiency and resource utilization are low. In a 5G network slicing technology, independent logical networks are virtualized on a same network infrastructure, to provide network environments isolated from each other for different application scenarios, so that network functions and features can be customized for the different application scenarios based on respective requirements, and QoS requirements of different services can be effectively ensured. An objective of the 5G network slicing technology is to organically combine terminal devices, access network resources, core network resources, and network operation and maintenance and management systems to provide a complete network that can be independently maintained and isolated for different business scenarios or service types.

Various scenarios pose different requirements on the 3GPP ecosystem, such as charging, policy, security, and mobility. The 3GPP emphasizes that network slices do not affect each other. For example, a large quantity of burst meter reading services should not affect normal mobile broadband services. To meet diversified requirements and slice isolation, independent management and operation and maintenance are required for services, and customized service functions and analysis capabilities are provided. Instances of different service types are deployed on different network slices, and instances of a same service type may also be deployed on different network slices.

When the network slice is deployed in a core network, if a user initially attaches to the network, a network slice selection process is triggered. The network slice selection process depends on subscription data of the user, local configuration information, a roaming protocol, an operator policy, and the like. In the network slice selection process, the foregoing parameters need to be comprehensively considered to select an optimal slice type for UE.

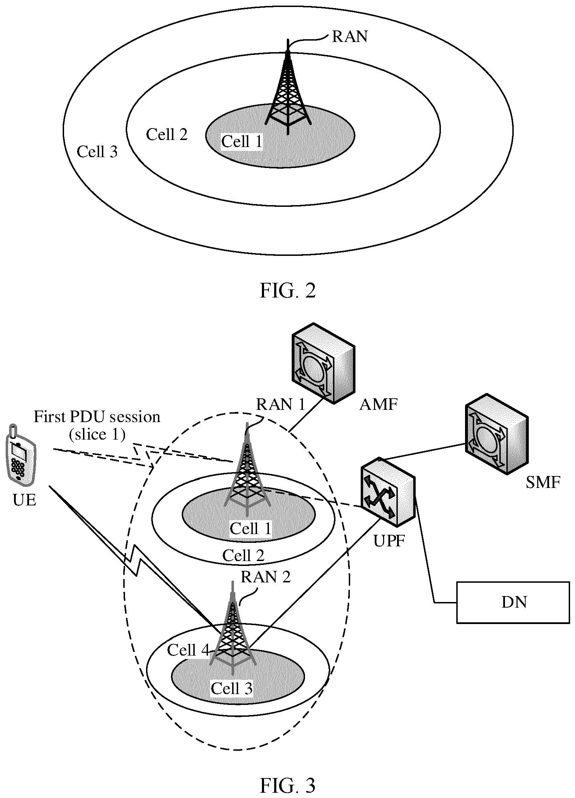

In actual deployment, there may be the following four scenarios in which the RAN supports slices. As shown in FIG. 2, it is assumed that the RAN has three cells (cells): a cell 1, a cell 2, and a cell 3 in the figure.

Scenario 1: The three cells in the RAN support a same slice and work in a same frequency band. As shown in Table 1, the cell 1, the cell 2, and the cell 3 all support a slice S-1, a slice S-2, and a slice S-3, and all work in frequency bands F1 and F2.

**Table 1**

| Cell | Slice | Frequency band |
|------|-------|----------------|
| Cell 1 | S-1, S-2, S-3 | F1, F2 |
| Cell 2 | S-1, S-2, S-3 | F1, F2 |
| Cell 3 | S-1, S-2, S-3 | F1, F2 |

Scenario 2: The three cells in the RAN support a same slice but work in different frequency bands. As shown in Table 2, the cell 1, the cell 2, and the cell 3 all support a slice S-1, a slice S-2, and a slice S-3, the cell 1 works in an F1 frequency band, the cell 2 works in the F1 frequency band, and the cell 3 works in an F3 frequency band.

**Table 2**

| Cell | Slice | Frequency band |
|------|-------|----------------|
| Cell 1 | S-1, S-2, S-3 | F1 |
| Cell 2 | S-1, S-2, S-3 | F1 |
| Cell 3 | S-1, S-2, S-3 | F3 |

Scenario 3: When the RAN (that is, the cell 1, the cell 2, or the cell 3) works in different frequency bands, different slices are supported. As shown in Table 3, when the RAN works in an F1 frequency band, a slice S1 and a slice S3 are supported; when the RAN works in an F2 frequency band, a slice S2 is supported; when the RAN works in an F3 frequency band, a slice S4 and a slice S5 are supported.

**Table 3**

| Cell | Frequency band | Slice |
|------|----------------|-------|
| RAN | F1 | S1, S3 |
| RAN | F2 | S2 |
| RAN | F3 | S4, S5 |

Scenario 4: The three cells of the RAN work in different frequency bands and correspondingly support different slices. As shown in Table 4, when the cell 1 works in an F1 frequency band, the cell 1 supports a slice S1 and a slice S3; when the cell 2 works in an F2 frequency band, the cell 2 supports a slice S2; when the cell 3 works in an F3 frequency band, the cell 3 supports a slice S4 and a slice S5.

**Table 4**

| Cell | Frequency band | Slice |
|------|----------------|-------|
| Cell 1 | F1 | S1, S3 |
| Cell 2 | F2 | S2 |
| Cell 3 | F3 | S4, S5 |

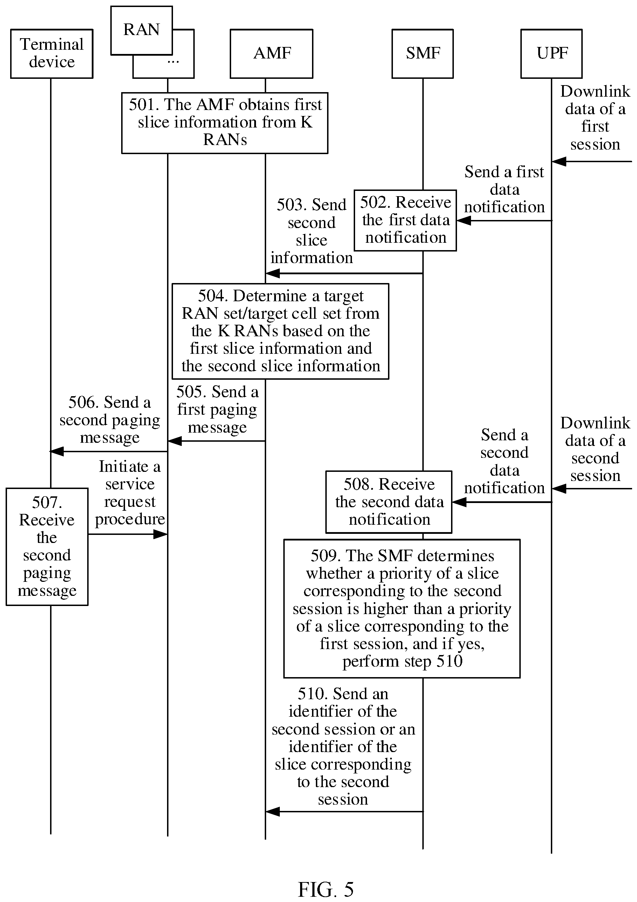

Currently, when a location of the UE moves, the UE needs to perform cell selection. In this case, if the UE considers only a signal measurement result, a target cell finally selected by the UE may not support a slice corresponding to a PDU session of the UE. In this case, the PDU session of the UE corresponding to the slice not supported by the target cell is to be released or cannot continue to transmit a data packet of a service carried by the PDU session. Therefore, continuity of the service carried by the PDU session cannot be ensured. For example, as shown in FIG. 3, in this scenario, the UE is initially located in a coverage area of a RAN 1, and the UE establishes a first PDU session and accesses a slice 1. In this case, the UE moves to a coverage area of a RAN 2. The RAN 1 supports the slice 1 and the slice 2, and the RAN 2 supports the slice 2 and the slice 3, as shown in FIG. 5. In addition, before the UE moves, the UE may enter idle (IDLE) mode because the UE has no interaction with a network side for a long period of time, that is, a user plane connection between the UE and a core network is disconnected.

**Table 5**

| RAN | Slice |
|-----|-------|
| RAN 1 | Slice 1, slice 2 |
| RAN 2 | Slice 2, slice 3 |

It is assumed that, in this case, downlink data arrives at the UPF, and paging for the UE is triggered. As shown in FIG. 3, the AMF pages the UE in an entire registration area (registration area, RA), and the RA includes the coverage areas of the RAN 1 and the RAN 2. Assuming that the AMF finds the UE in the RAN 2 through paging, the UE initiates a service request procedure in the RAN 2, to restore a user plane connection corresponding to the first PDU session.

In a possible manner, the RAN 2 releases the first PDU session.

In another possible manner, the RAN 2 restores the user plane connection for the first PDU session. However, because the RAN 2 does not support the slice 1 corresponding to the first PDU session, even if the user plane connection is restored, data of a service corresponding to the first PDU session may not be transmitted to the UE by using the user plane connection, and service continuity cannot be ensured.

Therefore, the AMF does not need to send a paging message to the RAN 2. In other words, redundant signaling interaction exists in the current paging process.

In another possible manner, the RAN 2 initiates a redirection procedure to redirect the UE to the RAN 1 that supports the slice 1. However, this causes additional signaling interaction.

Based on the foregoing analysis, embodiments of this application provide a cell selection method and a paging method. In the cell selection method, when performing cell selection, a terminal device not only considers a signal measurement result of a cell, but also considers cell selection assistance information of the terminal device. The cell selection assistance information includes identifiers of slices corresponding to one or more sessions and slice capability information of the cell. Cell selection or cell reselection is performed based on the measurement result of the cell and the cell selection assistance information, so that the cell selected by the terminal to camp on can support a slice corresponding to a session as much as possible. In addition, in the paging method, when paging a radio access network device, an access and mobility management function network element first filters out a target radio access network device set from a plurality of radio access network devices. A radio access network device in the target radio access network device set supports a slice associated with a session of to-be-sent downlink data, and the access and mobility management function network element sends a paging message to the target radio access network device set. Therefore, signaling is reduced to some extent, a signaling transmission path is reduced, and complexity of a paging process is reduced.

It should be noted that in embodiments of this application, a network slice may also be referred to as a slice, and the network slice and the slice have a same meaning. In embodiments of this application, an identifier of the slice may alternatively be replaced by other information that uniquely indicates the network slice, for example, a name of the network slice and a description of the network slice.

The following describes, with reference to the accompanying drawings, the technical solutions provided in embodiments of this application.

**Embodiment 1**

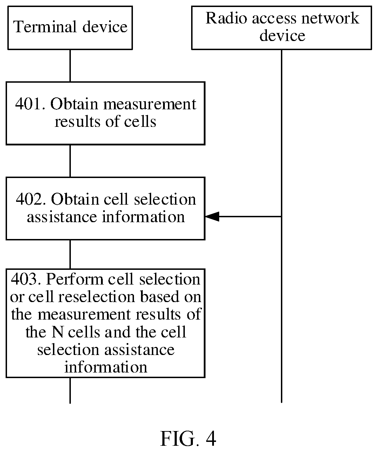

This embodiment of this application provides a cell selection method. FIG. 4 is a flowchart of the method. The following provides descriptions by using an example in which the method is applied to the network architecture shown in FIG. 1A or FIG. 1B. In addition, the method may be performed by a first communication apparatus. The first communication apparatus may be a terminal device, or a communication apparatus that can support the terminal device in implementing a function required in the method, for example, a component included in the terminal device, or a chip system in the terminal device.

For ease of description, the following describes in detail the cell selection method provided in this embodiment of this application by using an example in which the method is performed by the terminal device. Cell selection performed by the terminal device is to find, as soon as possible, a cell suitable for the terminal device to camp on. Generally, the cell selection may occur when the terminal device is powered on, the terminal returns to connected mode from idle (IDLE) mode, the terminal device searches for a PLMN of a higher level, a radio resource control (radio resource control, RRC) connection is reestablished, or the terminal device is handed over in connected mode.

FIG. 4 is a schematic flowchart of a cell selection procedure according to an embodiment of this application. The method may include the following steps.

Step 401: A terminal device obtains measurement results of N cells.

A possible manner of obtaining the measurement results of the N cells is: The terminal device performs cell measurement to obtain the measurement results of the N cells. For example, the terminal device may measure received reference signals, to obtain the measurement results of the N cells. The measurement result includes, for example, reference signal received power (reference signal received power, RSRP), and certainly may further include other information. A reference signal corresponding to the reference signal received power may be received power of a demodulation reference signal (demodulation reference signal, DMRS) on a physical sidelink shared channel (physical sidelink share channel, PSSCH) or a physical sidelink control channel (physical sidelink control channel, PSCCH). Another possible manner is: In a handover process, the terminal device may receive an indication from a source radio access network device, where the indication includes the measurement results of the N cells.

Step 402: The terminal device obtains cell selection assistance information.

Specifically, specific content of the cell selection assistance information may be any one of the following four cases.

Case A: The cell selection assistance information includes identifiers of L slices corresponding to M sessions of the terminal device and slice capability information of the N cells, where the slice capability information of the N cells includes identifiers of slices respectively supported by the N cells, and M, L, and N are positive integers. The M sessions may be one session, or two or more sessions. The session may be a bearer, a protocol data unit (protocol data unit, PDU) session, a public data network (public data network, PDN) connection, a quality of service flow (QoS flow), or the like.

Case B: The cell selection assistance information includes identifiers of L slices corresponding to M sessions of the terminal device and slice capability information of K radio access network devices, where the slice capability information of the K radio access network devices includes identifiers of slices respectively supported by the K radio access network devices. In other words, the slice capability information of the K radio access network devices includes identifiers of slices separately supported by all cells covered by the K radio access network devices. In other words, in the case B, a slice supported by a radio access network device includes a slice supported by each cell covered by the radio access network device.

Case C: The cell selection assistance information includes allowed slice selection assistance information and slice capability information of the N cells.

It should be noted that the allowed slice selection assistance information (allowed NSSAI) in this embodiment of this application is an identifier of a slice that allows the terminal device to access. The allowed slice selection assistance information indicates a slice that can be accessed by the terminal device in a current registration area.

The slice capability information of the N cells includes the identifiers of the slices respectively supported by the N cells, and M, L, and N are positive integers. The session may include a bearer, a protocol data unit (protocol data unit, PDU) session, a public data network (public data network, PDN) connection, a quality of service flow (QoS flow), or the like.

Case D: The cell selection assistance information includes allowed slice selection assistance information and slice capability information of K radio access network devices, where the slice capability information of the K radio access network devices includes identifiers of slices respectively supported by the K radio access network devices. In other words, the slice capability information of the K radio access network devices includes identifiers of slices separately supported by all cells covered by the K radio access network devices. In other words, in the case D, a slice supported by a radio access network device includes a slice supported by each cell covered by the radio access network device.

In this embodiment, the cell selection assistance information is mainly used by the terminal to determine a cell selection target preference when the terminal performs the cell selection or the cell reselection. The identifier of the slice is for uniquely identifying a network slice. Different network slices correspond to different slice identifiers. For example, the identifier of the slice may be single network slice selection assistance information (single network slice selection assistance information, S-NSSAI). In step 402, the terminal device may obtain the cell selection assistance information in the following manner:

In one aspect, the radio access network device sends a broadcast message, and the terminal device may receive the broadcast message from the surrounding radio access network device. The broadcast message may include slice capability information of the radio access network device or a cell. For example, the slice capability information of the cell includes an identifier (cell ID) of the cell and an identifier of a slice corresponding to the cell, or the slice capability information of the radio access network device includes an identifier of the radio access network device (a RAN ID) and an identifier of a slice corresponding to the radio access network device.

In other aspect, for the foregoing case A or case B, in a process of establishing the M sessions by the terminal device, the terminal device may store the identifiers of the L slices corresponding to the M sessions; or in a process of establishing the M sessions by the terminal device, a network device stores the identifiers of the L slices corresponding to the M sessions, and the terminal device may obtain the identifiers of the L slices corresponding to the M sessions from the network device. For example, in a process of establishing a PDU session (session), UE, an AMF, or an SMF stores a correspondence between an identifier of a PDU session (a PDU session ID) and an identifier of a slice (an S-NSSAI index). Therefore, the UE may determine an identifier of a slice corresponding to the PDU session. For the case C or the case D, the terminal device may obtain the allowed slice selection assistance information from the network device (for example, the AMF) in a registration procedure. All S-NSSAI corresponding to the M sessions (for example, the PDU session) initiated by the terminal device is included in the allowed (allowed) NSSAI.

Step 403: The terminal device performs cell selection or cell reselection based on the measurement results of the N cells and the cell selection assistance information.

In a first possible implementation, when specific content of the cell selection assistance information is as shown in the case A, the terminal device may determine, based on the measurement results of the N cells, a candidate target cell for the cell selection or the cell reselection. Then, the terminal device selects a target cell from the candidate target cell in any one of the following manners A, B, or C. It should be noted that, when the specific content of the cell selection assistance information is as shown in the case A, the terminal device may alternatively directly determine the target cell from the N cells. In other words, a process in which the terminal device determines the candidate target cell is optional.

For example, a specific manner of the process in which the terminal device determines, based on the measurement results of the N cells, the candidate target cell for the cell selection or the cell reselection may be: The terminal device selects the candidate target cell from the N cells based on a cell selection criterion or a cell reselection criterion.

For example, the cell selection criterion or the cell reselection criterion may use the following criterion, and a formula is as follows:

The terminal device can select to camp on the cell only when Srxlev>0 and Squal>0.

$$Srxlev = Qrxlevmeas - (Qrxlevmin\ Qrxlevminoffset) - Pcompensation$$

$$Squal = Qqualmeas - (Qqualmin + Qqualminoffset)$$ (where RSRP) or RSRQ reaches a specified threshold

Qrxlevmeas represents a measured cell receive signal level value, that is, RSRP. Qrxlevmin represents a minimum cell receive signal level value broadcast in a SIB 1, and represents a minimum downlink RSRP power value that a cell requires to receive a signal of the cell. Qrxlevminoffset indicates a minimum cell receive signal level offset broadcast in the SIB 1. Pcompensation indicates a measurement of an uplink signal strength, which is obtained by comparing maximum transmit power of the terminal device with maximum transmit power allowed by the cell. Srxlev indicates receive power for the cell selection. Squal indicates a quality value of the cell selection.

Further, the terminal device selects, based on the candidate target cell that is filtered out, the target cell from the candidate target cell in any one of the following manner A, B, or C.

Manner A: A cell supporting L slices is selected as the target cell.

For example, when it is determined that the target cell supporting the L slices exists in the candidate target cell, the terminal device selects the target cell.

For example, it is assumed that the UE establishes three PDU sessions, a PDU session 1 corresponds to a slice 1, a PDU session 2 corresponds to a slice 2, and a PDU session 3 corresponds to a slice 3. If the UE determines that the target cell in the candidate target cell supports the slice 1, the slice 2, and the slice 3, the UE selects to access the target cell during the cell selection or the cell reselection. In this way, even after the terminal device is handed over from another cell to the target cell, because the target cell still supports a PDU session established by the terminal device before the terminal device is handed over, the terminal device can restore a user plane connection of the original PDU session, so that service continuity of the terminal is ensured.

Manner B: A cell supporting a slice with a highest priority in the L slices is selected as the target cell.

For example, when determining that no target cell supporting the L slices exists in the candidate target cell, the terminal device selects, from the candidate target cell based on the cell selection assistance information and priorities of the L slices, a target cell supporting a first slice, where the first slice is a slice with a highest priority in the L slices.

The priorities of the L slices may be obtained based on preconfigured information, may be obtained from a network device side in a network registration process, or may be obtained from a network device side in a process of establishing the M sessions, that is, in a process of establishing each session, a priority of a slice of the session may be obtained from a network device side, and finally the priorities of the L slices of the M sessions are obtained.

For example, it is assumed that the UE establishes three PDU sessions, a PDU session 1 corresponds to a slice 1, a PDU session 2 corresponds to a slice 2, and a PDU session 3 corresponds to a slice 3. When performing the cell selection, the UE needs to consider a priority of a slice, and select, from the candidate target cell based on the priority of the slice, the target cell supporting the first slice. Optionally, when the UE determines that no cell supporting the slice 1, the slice 2, and the slice 3 exists, the priority of the slice is considered during the cell selection. In this way, even if the terminal device is handed over from another cell to the target cell, because the target cell has a highest priority, there is a highest probability that the PDU session established before the terminal device is handed over is supported. In this way, after the terminal device accesses the target cell, the user plane connection for the PDU session of the terminal device is most likely to be restored, so that service continuity of the terminal is ensured.

For example, the UE may obtain the priority of the slice in any one or a combination of the following manners.

Manner 1: The UE locally preconfigures an identifier of a slice and a priority corresponding to the slice, and the UE obtains the priority of the slice from the locally preconfigured information.

Manner 2: In a registration procedure initiated by the UE, the AMF obtains a priority corresponding to a slice locally or from a UDM or a PCF, and sends the priority to the UE, so that the UE obtains the priority of the slice.

Manner 3: In a PDU session establishment procedure initiated by the UE, an SMF obtains a priority corresponding to a slice locally or from a UDM or a PCF, and sends the priority to the UE, so that the UE obtains the priority of the slice.

Manner C: A cell supporting a maximum quantity of slices in the L slices is selected as the target cell.

For example, when determining that no target cell supporting the L slices exists in the candidate target cell, the terminal device selects, from the candidate target cell based on the cell selection assistance information and a quantity of intersections between the L slices and slices supported by each cell, a target cell with a largest quantity of intersections.

For example, it is assumed that the UE establishes three PDU sessions, a PDU session 1 corresponds to a slice 1, a PDU session 2 corresponds to a slice 2, and a PDU session 3 corresponds to a slice 3. The UE determines that a cell 1 in the candidate target cell supports the slice 1 and the slice 2, a cell 2 supports the slice 2, and a cell 3 supports the slice 3. Details are shown in the following Table 6. Because a quantity of intersections between the cell 1 and the slice 1, the slice 2, and the slice 3 is 2, and quantities of intersections between the cell 2 and the cell 3 and the slice 1, the slice 2, and the slice 3 are 1, the UE selects the cell 1 from the candidate target cell as the target cell. Optionally, when determining that no cell supporting the slice 1, the slice 2, and the slice 3 exists, the UE selects the target cell according to the foregoing method. In this way, even if the terminal device is handed over from another cell to the cell 1, because the cell 1 has a maximum probability of supporting the PDU session established by the terminal device before the terminal device is handed over, after the terminal device accesses the target cell, the user plane connection for the PDU session of the terminal device is most likely to be restored, so that service continuity of the terminal is ensured.

**Table 6**

| Cell | Slice |
|------|-------|
| Cell 1 | Slice 1, slice 2 |
| Cell 2 | Slice 2 |
| Cell 3 | Slice 3 |

In a second possible implementation, when specific content of the cell selection assistance information is as shown in the case B, the terminal device may determine, based on the measurement results of the N cells, a candidate target radio access network device for the cell selection or the cell reselection, and then the terminal device selects a cell of a target radio access network device from the candidate target radio access network device in any one of the following manner D, E, or F. It should be noted that when the specific content of the cell selection assistance information is as shown in the case B, the terminal device may alternatively directly determine the target radio access network device from N radio access network devices. In other words, a process in which the terminal device determines the candidate target radio access network device is optional.

Manner D: A radio access network device supporting the L slices is selected as a target radio access network device, and a cell of the target radio access network device is used as the target cell.

For example, when it is determined that a target radio access network device supporting the L slices exists in the candidate target radio access network device, the terminal device selects a cell covered by the target radio access network device as the target cell.

For example, it is assumed that the UE establishes three PDU sessions, a PDU session 1 corresponds to a slice 1, a PDU session 2 corresponds to a slice 2, and a PDU session 3 corresponds to a slice 3. If the UE determines that a target RAN in a candidate target RAN supports the slice 1, the slice 2, and the slice 3, the UE selects to access a cell of the target RAN during the cell selection or the cell reselection. In this way, even after the terminal device is handed over from another cell to the cell of the target RAN, because the cell of the target RAN still supports the PDU session established by the terminal device before the terminal device is handed over, the terminal device can restore the user plane connection of the original PDU session, so that service continuity of the terminal is ensured.

Manner E: A radio access network device supporting a slice with a highest priority in the L slices is selected as the target radio access network device. A cell of the target radio access network device is used as the target cell.

For example, when it is determined that no target radio access network device supporting the L slices exists in the candidate target radio access network device, a target radio access network device supporting a first slice is selected from the candidate target radio access network device based on the cell selection assistance information and the priorities of the L slices, and a cell covered by the target radio access network device is determined as the target cell. The first slice is a slice with a highest priority in the L slices. For a manner of obtaining the priorities of the L slices, refer to the foregoing manner B. Details are not described herein again.

For example, it is assumed that the UE establishes three PDU sessions, a PDU session 1 corresponds to a slice 1, a PDU session 2 corresponds to a slice 2, and a PDU session 3 corresponds to a slice 3. When performing the cell selection, the UE needs to consider a priority of a slice, and select, from a candidate target RAN based on the priority of the slice, a target RAN supporting the first slice. Optionally, when the UE determines that no radio access network device supporting the slice 1, the slice 2, and the slice 3 exists, a priority of the slice is considered during the cell selection. In this way, even if the terminal device is handed over between cells, because a slice supported by a cell of the target RAN has a highest priority, there is a maximum probability that the PDU session established by the terminal device before the terminal device is handed over is supported. In this way, after the terminal device accesses the cell of the target RAN, the user plane connection for the PDU session of the terminal device is most likely to be restored, so that service continuity of the terminal is ensured.

Manner F: A radio access network device supporting a maximum quantity of slices in the L slices is selected as the target radio access network device.

For example, when determining that no target radio access network device supporting the L slices exists in the candidate target radio access network device, the terminal device selects, from the candidate target radio access network device based on the cell selection assistance information and a quantity of intersections between slices supported by each radio access network device and the L slices, a target radio access network device with a largest quantity of intersections.

For example, it is assumed that the UE establishes three PDU sessions, a PDU session 1 corresponds to a slice 1, a PDU session 2 corresponds to a slice 2, and a PDU session 3 corresponds to a slice 3. The UE determines that a RAN 1 in a candidate target RAN supports the slice 1 and the slice 2, a RAN 2 supports the slice 2, and a RAN 3 supports the slice 3. Optionally, when determining that no cell supporting the slice 1, the slice 2, and the slice 3 exists, the UE selects the target cell according to the foregoing method. Details are shown in the following Table 7. Because a quantity of intersections between the RAN 1 and the slice 1, the slice 2, and the slice 3 is 2, and quantities of intersections between the RAN 2 and the RAN 3 and the slice 1, the slice 2, and the slice 3 are 1, the UE selects the RAN 1 from the candidate target RAN as the target RAN. In this way, even if the terminal device is handed over from another cell to a cell in the RAN 1, because the RAN 1 supports, at a maximum probability, the PDU session established by the terminal device before the terminal device is handed over, after the terminal device accesses the target RAN, the user plane connection for the PDU session of the terminal device is most likely to be restored, so that service continuity of the terminal is ensured.

**Table 7**

| RAN | Slice |
|---|---|
| RAN 1 | Slice 1, slice 2 |
| RAN 2 | Slice 2 |
| RAN 3 | Slice 3 |

For example, in the method shown in FIG. 4, with reference to the scenario shown in FIG. 3, in this scenario, the UE is initially located in a coverage area of the RAN 1, and the UE establishes a first PDU session and accesses the slice 1. In this case, the UE moves to a coverage area of the RAN 2. Because the UE moves, the UE needs to perform cell reselection. In this case, the UE not only considers a signal measurement result, but also considers cell assistance information. It is assumed that cells covered by the RAN 1 include a cell 1 and a cell 2, cells covered by the RAN 2 include a cell 3 and a cell 4, and slice capability information of the four cells is as shown in Table 8.

**Table 8**

| RAN | Cell | Slice |
|---|---|---|
| RAN 1 | Cell 1 | Slice 1, slice 2 |
| | Cell 2 | Slice 2 |
| RAN 2 | Cell 3 | Slice 1, slice 3 |
| | Cell 4 | Slice 4 |

It can be learned from Table 8 that, in the foregoing four cells, the cell 1 and the cell 3 support the slice 1 corresponding to the first PDU session are. Therefore, the UE 1 selects to be handed over from the cell 1 to the cell 3, and the cell 3 selected by the terminal device to camp on supports the slice corresponding to the session, so that normal transmission of a service can be ensured.

In this embodiment of this application, the terminal device may select, based on the cell selection assistance information and the signal measurement result, a cell more suitable for the terminal device to camp on. In this way, the cell selected by the terminal device to camp on is most likely to support a slice corresponding to a session, and therefore normal transmission of a service can be ensured at a maximum probability. Compared with the current technologies, this solution can avoid, to some extent, a problem of service discontinuity caused by cell handover, so that cell resources are fully and properly used as much as possible.

In a third possible implementation, when specific content of the cell selection assistance information is as shown in the case C, the terminal device may determine, based on the measurement results of the N cells, the candidate target cell for the cell selection or the cell reselection. Then, the terminal device selects the target cell from the candidate target cell in any one of the following manner A, B, or C. It should be noted that in this implementation, "the L slices corresponding to the M sessions of the terminal device" or "the L slices" in the manner A, the manner B, and the manner C is replaced with "the slices that allow the terminal device to access".

It should be noted that when the specific content of the cell selection assistance information is as shown in the case C, the terminal device may alternatively directly determine the target cell from the N cells. In other words, a process in which the terminal device determines the candidate target cell is optional.

In a fourth possible implementation, when specific content of the cell selection assistance information is as shown in the case D, the terminal device may determine, based on the measurement results of the N cells, a candidate target radio access network device for the cell selection or the cell reselection, and then the terminal device selects a cell of a target radio access network device from the candidate target radio access network device in any one of the following manner D, E, or F. It should be noted that, in this implementation, "the L slices corresponding to the M sessions of the terminal device" or "the L slices" in the manner D, the manner E, and the manner F" is replaced with "the slice that allows the terminal device to access", and "the slice corresponding to the session" is replaced with "the slice that allows the terminal device to access".

It should be noted that when the specific content of the cell selection assistance information is as shown in the case D, the terminal device may alternatively directly determine the target radio access network device from N radio access network devices. In other words, a process in which the terminal device determines the candidate target radio access network device is optional.

It should be noted that the method described in step 401 to step 403 may also be performed by another communication device. For example, the radio access network device may perform step 401 to step 403. In this case, in step 402, the radio access network device may obtain the measurement results of the N cells, the slice capability information of the N cells, or the slice capability information of the K radio access network devices in at least one of the following manners:

obtaining the measurement results or the slice capability information from the terminal device, from a local configuration, from another radio access network device, or from a radio access network management device.


**Embodiment 2**


This embodiment of this application provides a paging method. FIG. 5 is a flowchart of the method. The following provides descriptions by using an example in which the method is applied to the network architecture shown in FIG. 1A or FIG. 1B. In addition, the method may be performed by a second communication apparatus. The second communication apparatus may be an access and mobility management function network element, or a communication apparatus that can support the access and mobility management function network element in implementing a function required for the method, for example, a component included in the access and mobility management function network element, or a chip system in the access and mobility management function network element.

For ease of description, the following describes in detail the paging method provided in this embodiment of this application by using an example in which the method is performed by network elements such as an AMF, an SMF, and a RAN. The paging process is to restore a connection between a terminal and a core network, so that the terminal enters connected (Connected) mode.

FIG. 5 is a schematic flowchart of a paging method according to an embodiment of this application. The method may include the following steps.

Step 501: An AMF obtains first slice information from K RANs. The first slice information indicates slices supported by the K RANs, and K is a positive integer.

For example, that an AMF obtains first slice information from K RANs includes the following step: Step a: When the K RANs are powered on, the K RANs initiate an NG setup (setup) request message to the AMF. In this process, the K RANs send an identifier of a RAN (for example, a RAN ID), an identifier of a cell (for example, a cell ID), or an identifier (S-NSSAI) of a slice supported by the cell to the AMF. Step b: The AMF stores a correspondence between a cell and an identifier of a slice, and generates the first slice information, or the AMF stores a correspondence between a RAN and an identifier of a slice. Step c: The AMF sends an NG setup response message to the K RANs. The identifier of the slice may alternatively be identified by using an index value. To be specific, after obtaining a slice index value from the RAN, the AMF determines, based on a locally configured correspondence between an index value and a slice, a slice supported by the RAN.

Step 502: An SMF receives a first data notification message from a UPF. The first data notification message indicates that a first session of a terminal device has downlink data to be transmitted.

For example, after the UPF receives the downlink data (DL Data) of the first session, the UPF sends a data notification (or a DN message for short) to the SMF, where the data notification carries an N4 session ID.

Step 503: The SMF sends second slice information to the AMF, where the second slice information indicates a slice associated with a session of to-be-sent downlink data.

In a possible embodiment, the second slice information includes an identifier of the first session.

For example, the SMF sends Namf_Communication_N1N2MessageTransfer (an N11 message for short) to the AMF. The message includes an SUPI, a PDU session ID, an N1 SM container, and N2 SM info.

In another possible embodiment, the second slice information includes an identifier of a slice corresponding to the first session.

For example, the SMF sends Namf_Communication_N1N2MessageTransfer (an N11 message for short) to the AMF. The message further includes S-NSSAI.

Step 504: The AMF determines a target RAN set or a target cell set from the K RANs based on the first slice information and the second slice information.

The target RAN supports the slice associated with the session that is of the to-be-sent downlink data and that is indicated by the second slice information, or the target cell set supports the slice associated with the session that is of the to-be-sent downlink data and that is indicated by the second slice information.

In a possible embodiment, when the second slice information includes the identifier of the first session, the AMF further needs to determine, based on the identifier of the first session, the slice corresponding to the first session.

In another possible embodiment, when the second slice information includes the identifier of the slice corresponding to the first session, the AMF may determine, based on the second slice information, the slice corresponding to the first session.

Step 505: The AMF sends a first paging message to the target RAN set, or the AMF sends a first paging message to a target RAN set corresponding to the target cell set.

Optionally, the first paging message includes an identifier of a RAN in the target RAN set.

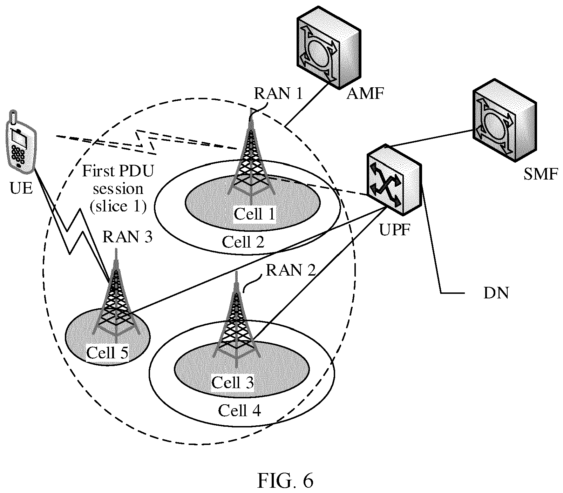

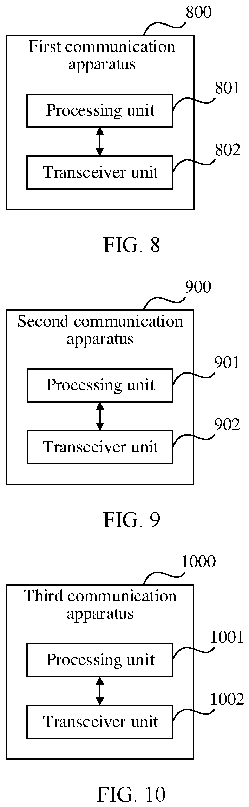

For example, with reference to the scenario shown in FIG. 6, in this scenario, UE is initially located in a coverage area of a RAN 1, and the UE establishes a first PDU session and accesses a slice 1. Because the UE has no interaction with a network side for a long period of time, the UE enters idle (IDLE) mode, and a user plane connection between the UE and a core network is released. The RAN 1 supports the slice 1 and a slice 2; a RAN 2 supports the slice 2 and a slice 3; a RAN 3 supports the slice 1 and a slice 4. It is assumed that the RAN 1 to the RAN 3 are all located in a registration area, as shown in FIG. 9.

**Table 9**

| RAN | Slice |
|---|---|
| RAN 1 | Slice 1, slice 2 |
| RAN 2 | Slice 2, slice 3 |
| RAN 3 | Slice 1, slice 4 |

It is assumed that, in this case, downlink data arrives at the UPF, and paging for the UE is triggered. As shown in FIG. 6, the AMF determines that the target RAN set is the RAN 1 and the RAN 3, and therefore sends the first paging message to the RAN 1 and the RAN 3. According to the scenario in FIG. 6, the UE may be found through paging in the RAN 3. Then, the UE initiates a service request procedure by using the RAN 3, to restore the user plane connection corresponding to the first PDU session. In comparison with the current technologies, in this embodiment, because the RAN 2 does not support the slice 1 corresponding to the first PDU session, the AMF does not need to send the first paging message to the RAN 2, so that signaling is reduced, a signaling transmission path is reduced, and paging efficiency is improved.

For another example, with reference to the scenario shown in FIG. 6, in this scenario, the UE is initially located in a coverage area of the RAN 1, and the UE establishes the first PDU session and accesses the slice 1. Because the UE has no interaction with a network side for a long period of time, the UE enters idle (IDLE) mode, and the user plane connection between the UE and a core network is released. A cell 1 and a cell 2 support the slice 1 and a slice 2; a cell 3 and a cell 4 support the slice 2 and a slice 3, and a cell 5 supports the slice 1 and the slice 4, as shown in Table 10.

**Table 10**

| RAN | Cell | Slice |
|---|---|---|
| RAN 1 | Cell 1 | Slice 1, slice 2 |
| | Cell 2 | Slice 1, slice 2 |
| RAN 2 | Cell 3 | Slice 2, slice 3 |
| | Cell 4 | Slice 2, slice 3 |
| RAN 3 | Cell 5 | Slice 1, slice 4 |

It is assumed that, in this case, downlink data arrives at the UPF, and paging for the UE is triggered. As shown in FIG. 6, the AMF determines that the target cell set is the cell 1, the cell 2, and the cell 5. Therefore, the AMF sends the first paging message to the RAN 1 and the RAN 3 corresponding to the cell 1, the cell 2, and the cell 5. It is assumed that the UE is found in the RAN 3 through paging, and the UE initiates a service request procedure by using the RAN 3, to restore the user plane connection corresponding to the first PDU session. In comparison with the current technologies, in this embodiment, because the RAN 2 does not support the slice 1 corresponding to the first PDU session, the AMF does not need to send the first paging message to the RAN 2, so that signaling is reduced, a signaling transmission path is reduced, and paging efficiency is improved.

Step 506: The target RAN that receives the first paging message sends a second paging message to the terminal device. The second paging message includes an identifier of a paged terminal device.

Step 507: The terminal device receives the second paging message sent by the target RAN. When the paging identifier in the second paging message carries the identifier of the terminal device, the terminal device responds to the paging message, that is, initiates a service request procedure.

Optionally, before the terminal device initiates the service request procedure, that is, in a process of waiting for activation of a user plane connection of the terminal device, the foregoing method embodiment may further include the following steps:

Step 508: The SMF receives a second data notification message from the UPF. The second data notification message indicates that a second session of the terminal device has downlink data to be transmitted. In this case, before the SMF learns that the terminal device initiates the service request procedure, the SMF may further continue to perform the following step 509 and step 510.

Step 509: The SMF determines whether a priority of a slice corresponding to the second session is higher than a priority of a slice corresponding to the first session. If the priority of the slice corresponding to the second session is higher than the priority of the slice corresponding to the first session, the SMF performs step 510; or otherwise, the SMF makes no response, that is, does not send a notification message to the AMF. Therefore, the AMF does not page the RAN again.

Step 510: The SMF sends an identifier of the second session or an identifier of the slice corresponding to the second session to the AMF. The identifier of the second session or the identifier of the slice corresponding to the second session is for paging the terminal device.

For example, the AMF determines the target RAN based on the received identifier of the second session or the received identifier of the slice corresponding to the second session, and sends a paging message to the target RAN, to page the terminal device.

For a process in which the AMF determines the target RAN, and sends a paging message to the target RAN to page the terminal device, refer to the descriptions of step 504 and step 505. Details are not described herein again.

Optionally, after receiving the identifier of the second session or the identifier of the slice corresponding to the second session, the AMF determines whether the priority of the slice corresponding to the second session is higher than the priority of the slice corresponding to the first session. If the priority of the slice corresponding to the second session is higher than the priority of the slice corresponding to the first session, the AMF determines the target RAN, and sends a paging message to the target RAN, to page the terminal device. The AMF determines the priority of the slice corresponding to the session, for scenarios in which the first session and the second session correspond to different SMFs. It is assumed that the first session corresponds to an SMF 1, and the second session corresponds to an SMF 2. In this case, after receiving the second data notification message from the UPF, the SMF 2 cannot determine whether the priority of the slice corresponding to the second session is higher than the priority of the slice corresponding to the first session. In this case, the AMF may determine whether the priority of the slice corresponding to the second session is higher than the priority of the slice corresponding to the first session. In other words, in this scenario, the SMF 1 performs step 502 and step 503 in the method, the SMF 2 performs step 508 and step 510 in the method, and the SMF 2 cannot perform step 509.

In this embodiment of this application, the AMF filters the K RANs based on the first slice information and the second slice information, to filter out the target RAN set. Because the target RAN set supports a slice corresponding to a session of the terminal device, signaling can be reduced, a signaling transmission path can be reduced, and complexity of a paging process can be reduced. In addition, in a process of activating the user plane connection of the terminal device, the SMF indicates the AMF to initiate paging only when a priority of a slice of received downlink data is higher. This can further reduce signaling overheads, and can also ensure that the terminal device is paged in time.

**Embodiment 3**

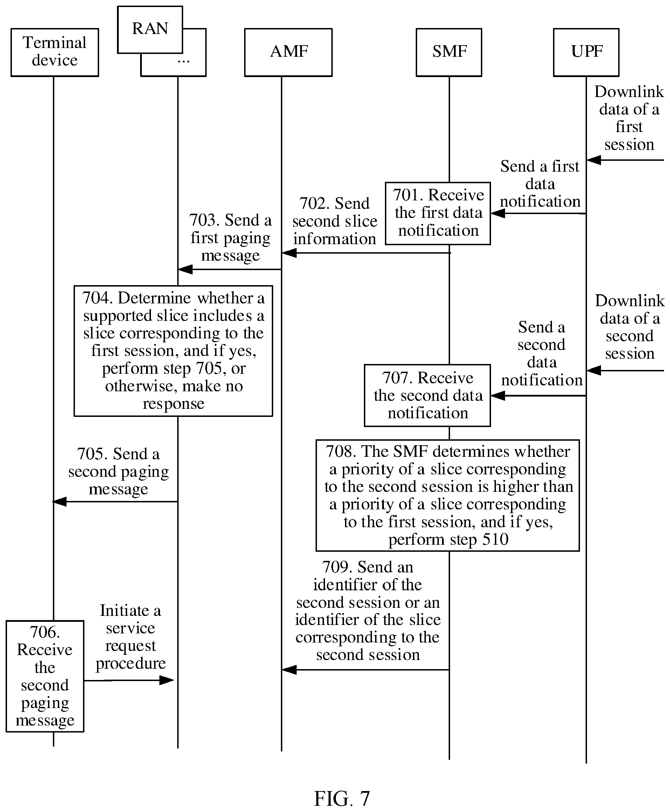

This embodiment of this application provides a second paging method. FIG. 7 is a schematic flowchart of the second paging method according to this embodiment of this application. The method may include the following steps.

Step 701: An SMF receives a first data notification message from a UPF. The first data notification message indicates that a first session of a terminal device has downlink data to be transmitted.

For example, after the UPF receives the downlink data (DL Data) of the first session, the UPF sends a data notification (or a DN message for short) to the SMF, where the data notification carries an N4 session ID.

Step 702: The SMF sends second slice information to an AMF. The second slice information indicates a slice associated with a session of to-be-sent downlink data.

In a possible embodiment, the second slice information is an identifier of the first session.

For example, the SMF sends Namf_Communication_N1N2MessageTransfer (an N11 message for short) to the AMF. The message includes an SUPI, a PDU session ID, an N1 SM container, and N2 SM info.

In another possible embodiment, the second slice information is an identifier of a slice corresponding to the first session.

For example, the SMF sends Namf_Communication_N1N2MessageTransfer (an N11 message for short) to the AMF. The message further includes the identifier (for example, S-NSSAI) of the slice corresponding to the first session.

Step 703: The AMF sends a first paging message to K RANs. The first paging message carries the identifier of the slice corresponding to the first session.

For example, the first paging message carries the S-NSSAI.

Step 704: A RAN determines whether a slice supported by the RAN includes the slice corresponding to the first session. If the slice supported by the RAN includes the slice corresponding to the first session, step 705 is performed; or otherwise, no response is made, that is, a second paging message is not sent to the UE.

Step 705: The RAN sends a second paging message to each terminal device camping on the RAN. The second paging message includes an identifier of a paged terminal device.

Step 706: The terminal device receives the second paging message. When the paging identifier in the second paging message carries the identifier of the terminal device, the terminal device responds to the paging message, that is, initiates a service request procedure.

It should be noted that before the terminal device performs step 706, that is, before the terminal device initiates the service request procedure, that is, in a process of waiting for activation of a user plane connection of the terminal device, the SMF may further perform the following step:

Step 707: The SMF further receives a second data notification message from the UPF. The second data notification message indicates that a second session of the terminal device has downlink data to be transmitted.

Step 708: The SMF determines whether a priority of a slice corresponding to the second session is higher than a priority of a slice corresponding to the first session. If the priority of the slice corresponding to the second session is higher than the priority of the slice corresponding to the first session, the SMF performs step 709; or otherwise, the SMF makes no response, that is, does not send a notification message to the AMF. Therefore, the AMF does not page the RAN again.

Step 709: The SMF sends an identifier of the second session or an identifier of the slice corresponding to the second session to the AMF, where the identifier of the second session is for paging the terminal device.

Optionally, after receiving the identifier of the second session or the identifier of the slice corresponding to the second session, the AMF determines whether the priority of the slice corresponding to the second session is higher than the priority of the slice corresponding to the first session. If the priority of the slice corresponding to the second session is higher than the priority of the slice corresponding to the first session, the AMF sends a paging message to the target RAN again, to page the terminal device. The AMF determines the priority of the slice corresponding to the session, for scenarios in which the first session and the second session correspond to different SMFs . It is assumed that the first session corresponds to an SMF 1, and the second session corresponds to an SMF 2. In this case, after receiving the second data notification message from the UPF, the SMF 2 cannot determine whether the priority of the slice corresponding to the second session is higher than the priority of the slice corresponding to the first session. In this case, the AMF may determine whether the priority of the slice corresponding to the second session is higher than the priority of the slice corresponding to the first session. In other words, in this scenario, the SMF 1 performs step 701 and step 702 in the method, the SMF 2 performs step 707 and step 709 in the method, and the SMF 2 cannot perform step 708.

In this embodiment of this application, the RAN determines, based on the identifier that is of the slice corresponding to the first session and that is obtained from the network device, whether to page the terminal device. When the RAN does not support the slice corresponding to the first session, the RAN no longer pages the terminal device. This can reduce signaling to some extent, reduce a signaling transmission path, and reduce complexity of a paging process. In addition, in a process of activating the user plane connection of the terminal device, the SMF indicates the AMF to initiate paging only when a priority of a slice of received downlink data is higher. This can further reduce signaling overheads, and can also ensure that the terminal device is paged in time.

For Embodiment 1 to Embodiment 3, it should be noted that: (1) Embodiment 1 to Embodiment 3 may be separately implemented in different scenarios, or may be jointly implemented in a same scenario. Alternatively, different solutions described in different embodiments may also be implemented in combination (for example, some or all solutions described in Embodiment 1 may be implemented in combination with Embodiment 2). This is not specifically limited.

(2) Step numbers in the flowcharts described in embodiments of this application are merely an example of an execution procedure, and do not constitute any limitation on an execution sequence of the steps. In embodiments of this application, there is no strict execution sequence between steps that do not have a time sequence dependency relationship with each other.

To implement the functions in the cell selection method and the paging method provided in the foregoing embodiments of this application, the terminal may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Same as a concept of the foregoing embodiments, an embodiment of this application further provides a first communication apparatus 800, and the first communication apparatus 800 is configured to implement a function of the terminal device in the foregoing methods. For example, the first communication apparatus 800 may be the terminal device in FIG. 4, or may be an apparatus in the terminal device. The apparatus may be a chip system. In this embodiment of this application, the chip system may include a chip, or may include a chip and another discrete component.

As shown in FIG. 8, the first communication apparatus 800 includes a processing unit 801 and a transceiver unit 802.

For the method shown in FIG. 4, the transceiver unit 802 is configured to: obtain measurement results of N cells and obtain cell selection assistance information. The cell selection assistance information includes identifiers of L slices corresponding to M sessions of a terminal device and slice capability information of the N cells, the slice capability information of the N cells includes identifiers of slices respectively supported by the N cells, or the cell selection assistance information includes slice capability information of K radio access network devices corresponding to the M sessions of the terminal device, and the slice capability information of the K radio access network devices includes identifiers of slices respectively supported by the K radio access network devices. For specific content of the cell selection assistance information, refer to the case A and the case B in Embodiment 1, and details are not described herein again. In addition, for a specific manner of obtaining the cell selection assistance information, refer to the descriptions of Embodiment 1.

The processing unit 801 is configured to perform cell selection or cell reselection based on the measurement results of the N cells and the cell selection assistance information.

In some embodiments, the processing unit 801 is configured to: determine, based on the measurement results of the N cells, a candidate target cell for the cell selection or the cell reselection; and select, from the candidate target cell based on the cell selection assistance information, a target cell supporting the L slices.

In some embodiments, when selecting, from the candidate target cell based on the cell selection assistance information, the target cell supporting the L slices, the processing unit 801 specifically performs:
determining whether the target cell supporting the L slices exists in the candidate target cell; and if the target cell exists, selecting the target cell; or otherwise, selecting, from the candidate target cell based on the cell selection assistance information and priorities of the L slices, a target cell supporting a first slice, where the first slice is a slice with a highest priority in the L slices.

In some embodiments, the processing unit 801 is configured to: determine, based on the measurement results of the N cells, a candidate target radio access network device for the cell selection or the cell reselection; and select, from the candidate target radio access network device based on the cell selection assistance information, a target radio access network device supporting the L slices.

In some embodiments, when selecting, from the candidate target cell based on the cell selection assistance information, the target cell supporting the L slices, the processing unit 801 specifically performs:
determining whether the target radio access network device supporting the L slices exists in the candidate target radio access network device; and if the target radio access network device exists, selecting the target radio access network device; or otherwise, selecting, from the candidate target radio access network device based on the cell selection assistance information and priorities of the L slices, a target radio access network device supporting a first slice, where the first slice is a slice with a highest priority in the L slices.

In some embodiments, the transceiver unit 802 is further configured to: obtain the priorities of the L slices based on preconfigued information; or obtain the priorities of the L slices from a network device side in a network registration process.

In still another example, for the method shown in FIG. 4, the transceiver unit 802 of the first communication apparatus is configured to: obtain measurement results of N cells and obtain cell selection assistance information. The cell selection assistance information includes allowed slice selection assistance information and slice capability information of the N cells. The allowed slice selection assistance information indicates a slice that can be accessed by the terminal device in a current registration area, and the allowed slice selection assistance information may include slices corresponding to the M sessions of the terminal device. The slice capability information of the N cells includes the identifiers of the slices respectively supported by the N cells or the slice capability information of the K radio access network devices. For specific content of the cell selection assistance information, refer to the case C and the case D in Embodiment 1, and details are not described herein again. In addition, for a specific manner of obtaining the cell selection assistance information, refer to the descriptions of Embodiment 1.

The processing unit 801 is configured to perform cell selection or cell reselection based on the measurement results of the N cells and the cell selection assistance information.

In some embodiments, the processing unit 801 is configured to: determine, based on the measurement results of the N cells, a candidate target cell for the cell selection or the cell reselection; and select, from the candidate target cell based on the cell selection assistance information, a target cell supporting a slice that allows the terminal device to access.

In some embodiments, when selecting, from the candidate target cell based on the cell selection assistance information, the target cell supporting the slice that allows the terminal device to access, the processing unit 801 specifically performs:

determining whether the target cell supporting the slice that allows the terminal device to access exists in the candidate target cell; and if the target cell exists, selecting the target cell; or otherwise selecting a target cell supporting a first slice from the candidate target cell based on the cell selection assistance information and a priority of the slice that allows the terminal device to access, where the first slice is a slice with a highest priority in the slice that allows the terminal device to access.

In some embodiments, the processing unit 801 is configured to: determine, based on the measurement results of the N cells, a candidate target radio access network device for the cell selection or the cell reselection; and select, from the candidate target radio access network device based on the cell selection assistance information, a target radio access network device supporting a slice that allows the terminal device to access.

In some embodiments, when selecting, from the candidate target cell based on the cell selection assistance information, the target cell supporting the slice that allows the terminal device to access, the processing unit 801 specifically performs:

determining whether the target radio access network device supporting the slice that allows the terminal device to access exists in the candidate target radio access network device; and if the target radio access network device exists, selecting the target radio access network device; or otherwise selecting a target radio access network device supporting a first slice from the candidate target radio access network device based on the cell selection assistance information and a priority of the slice that allows the terminal device to access, where the first slice is a slice with a highest priority in the slice that allows the terminal device to access.

In some embodiments, the transceiver unit 802 is further configured to: obtain, based on preconfigured information, the priority of the slice that allows the terminal device to access; or obtain, from a network device side in a network registration process, the priority of the slice that allows the terminal device to access.

For specific execution processes and beneficial effects of the processing unit 801 and the transceiver unit 802, refer to records in the method related to FIG. 4.

An embodiment of this application further provides a second communication apparatus 900. The second communication apparatus 900 is configured to implement the functions of the access and mobility management function network element in the foregoing methods. For example, the second communication apparatus 900 may be an access and mobility management function network element, or may be an apparatus in the access and mobility management function network element. The apparatus may be a chip system. In this embodiment of this application, the chip system may include a chip, or may include a chip and another discrete component.

In an example, as shown in FIG. 9, the second communication apparatus 900 includes a processing unit 901 and a transceiver unit 902.

For the method shown in FIG. 5, the transceiver unit 902 is configured to obtain first slice information and second slice information. For specific content of the first slice information and the second slice information, refer to Embodiment 2.

The processing unit 901 is configured to determine a target radio access network device set from K radio access network devices based on the first slice information and the second slice information, where a radio access network device in the target radio access network device set supports a slice indicated by the second slice information. Alternatively, the processing unit 901 is configured to determine a target cell set from N cells based on the first slice information and the second slice information, where the target cell set includes a target cell supporting the slice indicated by the second slice information.

The transceiver unit 902 is further configured to send a paging message to the target radio access network device set. Alternatively, the transceiver unit 902 is configured to send a paging message to a radio access network device corresponding to the target cell set.

In some possible embodiments, when obtaining the first slice information, the transceiver unit 902 is specifically configured to receive identifiers of slices from the K radio access network devices; and the processing unit 901 is further configured to determine the first slice information based on the identifiers of the slices.

In some possible embodiments, when obtaining the second slice information, the transceiver unit 902 is specifically configured to receive an identifier of a slice from a session management function network element; and the processing unit 901 is further configured to determine the second slice information based on the identifier of the slice.

In some possible embodiments, when obtaining the second slice information, the transceiver unit 902 is specifically configured to receive, from the session management function network element, an identifier of a session of to-be sent downlink data; and the processing unit 901 is further configured to determine the second slice information based on a slice corresponding to the identifier of the session of the to-be sent downlink data.

In some possible embodiments, the first slice information indicates slices supported by the N cells of the K radio access network devices, where K and N are positive integers, and the processing unit 901 is specifically configured to determine the target cell set in the target radio access network device set from the N cells of the K radio access network devices based on the first slice information and the second slice information, where the paging message includes an identifier of a target cell in the target cell set.

For specific execution processes and beneficial effects of the processing unit 901 and the transceiver unit 902, refer to records in the method related to FIG. 5.

An embodiment of this application further provides a third communication apparatus 1000. The third communication apparatus 1000 is configured to implement the functions of the session management function network element in the foregoing methods. For example, the third communication apparatus 1000 may be a session management function network element, or may be an apparatus in the session management function network element. The apparatus may be a chip system. In this embodiment of this application, the chip system may include a chip, or may include a chip and another discrete component.

In an example, as shown in FIG. 10, the third communication apparatus 1000 includes a processing unit 1001 and a transceiver unit 1002.

For the method shown in FIG. 7, the transceiver unit 1002 obtains a first data notification message, where the first data notification message indicates that a first session of a terminal device has downlink data to be transmitted, and sends an identifier of the first session to an access and mobility management function network element, where the identifier of the first session is for paging the terminal device; and

receives, in a process of waiting for activation of a user plane connection of the terminal device, a second data notification message from a user plane function network element, where the second data notification message indicates that a second session of the terminal device has downlink data to be transmitted.

The processing unit 1001 is configured to determine that a priority of a slice corresponding to the second session is higher than a priority of a slice corresponding to the first session.

The transceiver unit 1002 is configured to send an identifier of the second session to the access and mobility management function network element, where the identifier of the second session is for paging the terminal device.

In some possible embodiments, when it is determined that the priority of the slice corresponding to the second session is lower than or equal to the priority of the slice corresponding to the first session, no response is made.

For specific execution processes and beneficial effects of the processing unit 1001 and the transceiver unit 1002, refer to records in the method related to FIG. 7.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

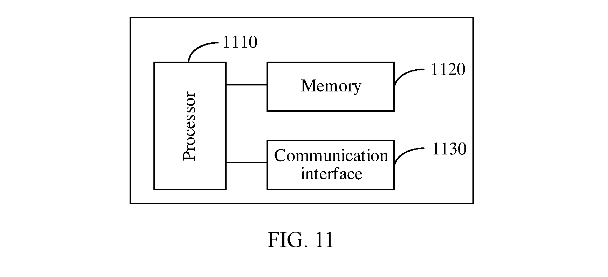

In still another example, as shown in FIG. 11, the first communication apparatus 800, the second communication apparatus 900, and the third communication apparatus 1000 include at least one processor 1110 and a memory 1120. The memory 1120 stores a computer program. The memory 1120 is coupled to the processor 1110. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 1120 may be further located outside the first communication apparatus 800, the second communication apparatus 900, or the third communication apparatus 1000. The processor 1110 may cooperate with the memory 1120. The processor 1110 may invoke a computer program stored in the memory 1120. At least one of the at least one memory may be included in the processor.

In some embodiments, the first communication apparatus 800, the second communication apparatus 900, or the third communication apparatus 1000 may further include a communication interface 1130, configured to communicate with another device by using a transmission medium, so that an apparatus used in the first communication apparatus 800, the second communication apparatus 900, or the third communication apparatus 1000 may communicate with the another device. For example, the communication interface 1130 may be a transceiver, a circuit, a bus, a module, or another type of communication interface. The another device may be another terminal. The processor 1110 receives and sends information through the communication interface 1130, and is configured to implement the methods in the foregoing embodiments. For example, the communication interface 1130 is configured to receive resource indication information. For another example, the communication interface 1130 is configured to send data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the computer program, and/or the data.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program is loaded and executed on the computer, the procedures or functions according to the embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any medium accessible by a computer, or a data storage device, such as a server or a data center, integrating one or more usable media. The medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

**Claims**

1.   A cell selection method, wherein the method comprises:

   obtaining measurement results of N cells;
   obtaining cell selection assistance information, wherein the cell selection assistance information comprises identifiers of L slices corresponding to M sessions of a terminal device and slice capability information of the N cells, the slice capability information of the N cells comprises identifiers of slices respectively supported by the N cells, and M, L, and N are positive integers; and
   performing cell selection or cell reselection based on the measurement results of the N cells and the cell selection assistance information.

2.   The method according to claim 1, wherein the performing cell selection or cell reselection based on the measurement results of the N cells and the cell selection assistance information comprises:

   determining, based on the measurement results of the N cells, a candidate target cell for the cell selection or the cell reselection; and
   selecting, from the candidate target cell based on the cell selection assistance information, a target cell supporting the L slices.

3.   The method according to claim 2, wherein the selecting, from the candidate target cell based on the cell selection assistance information, a target cell supporting the L slices comprises:

   determining whether the target cell supporting the L slices exists in the candidate target cell; and

if the target cell exists, selecting the target cell; or otherwise
selecting, from the candidate target cell based on the cell selection assistance information and priorities of the L slices, a target cell supporting a first slice, wherein the first slice is a slice with a highest priority in the L slices.

4. The method according to claim 3, wherein the method further comprises:

obtaining the priorities of the L slices based on preconfigured information;
obtaining the priorities of the L slices from a network device side in a network registration process; or
obtaining the priorities of the L slices from a network device side in a process of establishing the M sessions.

5. A cell selection method, wherein the method comprises:

obtaining measurement results of N cells;
obtaining cell selection assistance information, wherein the cell selection assistance information comprises slice capability information of the N cells and allowed slice selection assistance information, the allowed slice selection assistance information is an identifier of a slice that allows a terminal device to access, the slice capability information of the N cells comprises identifiers of slices respectively supported by the N cells, and M and N are positive integers; and
performing cell selection or cell reselection based on the measurement results of the N cells and the cell selection assistance information.

6. The method according to claim 5, wherein the performing cell selection or cell reselection based on the measurement results of the N cells and the cell selection assistance information comprises:

determining, based on the measurement results of the N cells, a candidate target cell for the cell selection or the cell reselection; and
selecting, from the candidate target cell based on the cell selection assistance information, a target cell supporting the slice that allows the terminal device to access.

7. The method according to claim 6, wherein the selecting, from the candidate target cell based on the cell selection assistance information, a target cell supporting the slice that allows the terminal device to access comprises:

determining whether the target cell supporting the slice that allows the terminal device to access exists in the candidate target cell; and
if the target cell exists, selecting the target cell; or otherwise
selecting a target cell supporting a first slice from the candidate target cell based on the cell selection assistance information and a priority of the slice that allows the terminal device to access, wherein the first slice is a slice with a highest priority in the slice that allows the terminal device to access.

8. The method according to claim 7, wherein the method further comprises:

obtaining, based on preconfigured information, the priority of the slice that allows the terminal device to access; or
obtaining, from a network device side in a network registration process, the priority of the slice that allows the terminal device to access.

9. A paging method, wherein the method comprises:

obtaining first slice information, wherein the first slice information indicates slices supported by K radio access network devices, and K is a positive integer;
obtaining second slice information, wherein the second slice information indicates a slice associated with a session of to-be-sent downlink data;
determining a target radio access network device set from the K radio access network devices based on the first slice information and the second slice information, wherein a radio access network device in the target radio access network device set supports the slice indicated by the second slice information; and
sending a paging message to the target radio access network device set.

10. The method according to claim 9, wherein the obtaining first slice information comprises:

receiving identifiers of the slices from the K radio access network devices; and
determining the first slice information based on the identifiers of the slices.

**11.** The method according to claim 9 or 10, wherein the obtaining second slice information comprises:

receiving an identifier of a slice from a session management function network element; and
determining the second slice information based on the identifier of the slice.

**12.** The method according to claim 9 or 10, wherein the obtaining second slice information comprises:

receiving, from the session management function network element, an identifier of the session of the to-be sent downlink data; and
determining the second slice information based on a slice corresponding to the identifier of the session of the to-be sent downlink data.

**13.** The method according to any one of claims 9 to 12, wherein the first slice information indicates slices supported by N cells of the K radio access network devices, K and N are positive integers, and the determining a target radio access network device set from the K radio access network devices based on the first slice information and the second slice information comprises:

determining a target cell set in the target radio access network device set from the N cells of the K radio access network devices based on the first slice information and the second slice information, wherein
the paging message comprises an identifier of a target cell in the target cell set.

**14.** A paging method, wherein the method comprises:

obtaining a first data notification message, wherein the first data notification message indicates that a first session of a terminal device has downlink data to be transmitted;
sending an identifier of the first session to an access and mobility management function network element, wherein the identifier of the first session is for paging the terminal device;
receiving, in a process of waiting for activation of a user plane connection of the terminal device, a second data notification message from a user plane function network element, wherein the second data notification message indicates that a second session of the terminal device has downlink data to be transmitted;
determining that a priority of a slice corresponding to the second session is higher than a priority of a slice corresponding to the first session; and
sending an identifier of the second session to the access and mobility management function network element, wherein the identifier of the second session is for paging the terminal device.

**15.** The method according to claim 14, further comprising:
when determining that the priority of the slice corresponding to the second session is lower than or equal to the priority of the slice corresponding to the first session, making no response.

**16.** A communication apparatus, comprising:

a transceiver unit, configured to obtain measurement results of N cells and cell selection assistance information, wherein the cell selection assistance information comprises identifiers of L slices corresponding to M sessions of a terminal device and slice capability information of the N cells, the slice capability information of the N cells comprises identifiers of slices respectively supported by the N cells, and M, L, and N are positive integers; and
a processing unit, configured to perform cell selection or cell reselection based on the measurement results of the N cells and the cell selection assistance information.

**17.** The communication apparatus according to claim 16, wherein the processing unit is specifically configured to:

determine, based on the measurement results of the N cells, a candidate target cell for the cell selection or the cell reselection; and
select, from the candidate target cell based on the cell selection assistance information, a target cell supporting the L slices.

18. The communication apparatus according to claim 17, wherein when selecting, from the candidate target cell based on the cell selection assistance information, a target cell supporting the L slices, the processing unit is specifically configured to:

determine whether the target cell supporting the L slices exists in the candidate target cell; and
if the target cell exists, select the target cell; or otherwise
select, from the candidate target cell based on the cell selection assistance information and priorities of the L slices, a target cell supporting a first slice, wherein the first slice is a slice with a highest priority in the L slices.

19. The communication apparatus according to claim 18, wherein the transceiver unit is further configured to:

obtain the priorities of the L slices based on preconfigured information;
obtain the priorities of the L slices from a network device side in a network registration process; or
obtain the priorities of the L slices from a network device side in a process of establishing the M sessions.

20. A communication apparatus, comprising:

a transceiver unit, configured to obtain measurement results of N cells and cell selection assistance information, wherein the cell selection assistance information comprises slice capability information of the N cells and allowed slice selection assistance information, the allowed slice selection assistance information is an identifier of a slice that allows a terminal device to access, the slice capability information of the N cells comprises identifiers of slices respectively supported by the N cells, and M and N are positive integers; and
a processing unit, configured to perform cell selection or cell reselection based on the measurement results of the N cells and the cell selection assistance information.

21. The communication apparatus according to claim 20, wherein the processing unit is specifically configured to:

determine, based on the measurement results of the N cells, a candidate target cell for the cell selection or the cell reselection; and
select, from the candidate target cell based on the cell selection assistance information, a target cell supporting the slice that allows the terminal device to access.

22. The communication apparatus according to claim 21, wherein when selecting, from the candidate target cell based on the cell selection assistance information, the target cell supporting the slice that allows the terminal device to access, the processing unit is specifically configured to:

determine whether the target cell supporting the slice that allows the terminal device to access exists in the candidate target cell; and
if the target cell exists, select the target cell; or otherwise
select a target cell supporting a first slice from the candidate target cell based on the cell selection assistance information and a priority of the slice that allows the terminal device to access, wherein the first slice is a slice with a highest priority in the slice that allows the terminal device to access.

23. The communication apparatus according to claim 22, wherein the transceiver unit is further configured to:

obtain, based on preconfigured information, the priority of the slice that allows the terminal device to access; or
obtain, from a network device side in a network registration process, the priority of the slice that allows the terminal device to access.

24. A communication apparatus, comprising:

a transceiver unit, configured to: obtain first slice information, wherein the first slice information indicates slices supported by K radio access network devices, and K is a positive integer; and obtain second slice information, wherein the second slice information indicates a slice associated with a session that carries to-be-sent downlink data; and
a processing unit, configured to determine a target radio access network device set from the K radio access network devices based on the first slice information and the second slice information, wherein the target radio access network device set comprises a radio access network device supporting the slice indicated by the second slice information, wherein
the transceiver unit is further configured to send a paging message to the target radio access network device set.

25. The communication apparatus according to claim 24, wherein when obtaining the first slice information, the transceiver unit is specifically configured to:

receive identifiers of the slices from the K radio access network devices; and
the processing unit is further configured to determine the first slice information based on the identifiers of the slices.

26. The communication apparatus according to claim 24 or 25, wherein when obtaining the second slice information, the transceiver unit is specifically configured to:

receive an identifier of a slice from a session management function network element; and
the processing unit is further configured to determine the second slice information based on the identifier of the slice.

27. The communication apparatus according to claim 24 or 25, wherein when obtaining the second slice information, the transceiver unit is specifically configured to:

receive, from the session management function network element, an identifier of the session of the to-be sent downlink data; and
the processing unit is further configured to determine the second slice information based on a slice corresponding to the identifier of the session of the to-be sent downlink data.

28. The communication apparatus according to any one of claims 24 to 27, wherein the processing unit is specifically configured to determine a target cell set in the target radio access network device set from the K radio access network devices based on the first slice information and the second slice information; and
the transceiver unit is specifically configured to send a paging message to the target cell set, wherein the paging message comprises an identifier of a target cell in the target cell set.

29. A communication apparatus, comprising:

a transceiver unit, configured to obtain a first data notification message, wherein the first data notification message indicates that a first session of a terminal device has downlink data to be transmitted, wherein
the transceiver unit is further configured to send an identifier of the first session to an access and mobility management function network element, wherein the identifier of the first session is for paging the terminal device; and
the transceiver unit is further configured to receive, in a process of waiting for activation of a user plane connection of the terminal device, a second data notification message from a user plane function network element, wherein the second data notification message indicates that a second session of the terminal device has downlink data to be transmitted; and
a processing unit, configured to determine that a priority of a slice corresponding to the second session is higher than a priority of a slice corresponding to the first session, wherein
the transceiver unit is further configured to send an identifier of the second session to the access and mobility management function network element, wherein the identifier of the second session is for paging the terminal device.

30. The communication apparatus according to claim 29, wherein the processing unit is further configured to:
when determining that the priority of the slice corresponding to the second session is lower than or equal to the priority of the slice corresponding to the first session, make no response.

NEF

NRF

PCF

UDM

AF

Nnef

Nnrf

Npcf

Nudm

Naf

Nausf

Nudr

Namf

Nsmf

AUSF

UDR

AMF

SMF

N1

N2

N4

UE

RAN

N3

UPF

N6

DN

FIG. 1A

AUSF ─N13─ UDM ─N35─ UDR

N12

N8

N10

N36

AMF ─N11─ SMF ─N7─ PCF ─N5─ AF

N1

N2

N4

N15

UE

(R)AN ─N3─ UPF ─N6─ DN

N9

FIG. 1B

FIG. 2

FIG. 3

```
┌──────────────────────┐        ┌──────────────────────────┐
│   Terminal device    │        │  Radio access network    │
│                      │        │         device           │
└──────────┬───────────┘        └────────────┬─────────────┘
           │                                 │
           │                                 │
┌──────────┴───────────┐                     │
│ 401. Obtain measurement│                   │
│    results of cells   │                    │
└──────────┬───────────┘                     │
           │                                 │
┌──────────┴───────────┐                     │
│ 402. Obtain cell selection│◄───────────────│
│  assistance information │                   │
└──────────┬───────────┘                     │
           │                                 │
┌──────────┴───────────┐                     │
│ 403. Perform cell selection│               │
│ or cell reselection based on│              │
│ the measurement results of │               │
│   the N cells and the cell │               │
│   selection assistance    │                │
│      information          │                 │
└──────────┬───────────┘                     │
           │                                 │
```

FIG. 4

| Terminal device | RAN ... | AMF | SMF | UPF |
|---|---|---|---|---|

501. The AMF obtains first slice information from K RANs

Downlink data of a first session

502. Receive the first data notification

Send a first data notification

503. Send second slice information

504. Determine a target RAN set/target cell set from the K RANs based on the first slice information and the second slice information

506. Send a second paging message

505. Send a first paging message

Initiate a service request procedure

507. Receive the second paging message

Downlink data of a second session

Send a second data notification

508. Receive the second data notification

509. The SMF determines whether a priority of a slice corresponding to the second session is higher than a priority of a slice corresponding to the first session, and if yes, perform step 510

510. Send an identifier of the second session or an identifier of the slice corresponding to the second session

FIG. 5

RAN 1    AMF

SMF

First PDU
session
(slice 1)

UE

Cell 1

RAN 3

Cell 2

UPF

RAN 2

DN

Cell 5

Cell 3

Cell 4

FIG. 6

FIG. 7

```
                                  800
          ┌──────────────────────┐
          │  First communication │
          │       apparatus      │
          │   ┌──────────────┐   │  801
          │   │Processing unit│  │
          │   └──────────────┘   │
          │          ↕           │  802
          │   ┌──────────────┐   │
          │   │Transceiver unit│ │
          │   └──────────────┘   │
          └──────────────────────┘
```

FIG. 8

```
                                  900
          ┌──────────────────────┐
          │ Second communication │
          │       apparatus      │
          │   ┌──────────────┐   │  901
          │   │Processing unit│  │
          │   └──────────────┘   │
          │          ↕           │  902
          │   ┌──────────────┐   │
          │   │Transceiver unit│ │
          │   └──────────────┘   │
          └──────────────────────┘
```

FIG. 9

```
                                  1000
          ┌──────────────────────┐
          │  Third communication │
          │       apparatus      │
          │   ┌──────────────┐   │  1001
          │   │Processing unit│  │
          │   └──────────────┘   │
          │          ↕           │  1002
          │   ┌──────────────┐   │
          │   │Transceiver unit│ │
          │   └──────────────┘   │
          └──────────────────────┘
```

FIG. 10

1110

Processor

Memory 1120

Communication interface 1130

FIG. 11

## INTERNATIONAL SEARCH REPORT

| International application No. |
|---|
| **PCT/CN2020/119320** |

| A. | CLASSIFICATION OF SUBJECT MATTER |
|---|---|
| | H04W 36/08(2009.01)i;  H04W 68/02(2009.01)i |

According to International Patent Classification (IPC) or to both national classification and IPC

| B. | FIELDS SEARCHED |
|---|---|

Minimum documentation searched (classification system followed by classification symbols)

    H04W

Documentation searched other than minimum documentation to the extent that such documents are included in the fields searched

Electronic data base consulted during the international search (name of data base and, where practicable, search terms used)

    WPI, EPODOC, CNPAT, CNKI: 5G, NR, 网络切片, 能力, 测量, 小区, 重选, 切换, 寻呼, 优先级, network slicing, capability, measure, cell, reselect, handover, paging, priority

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108024297 A (INDUSTRIAL TECHNOLOGY RESEARCH INSTITUTE) 11 May 2018 (2018-05-11)<br>    description paragraphs 0036-0101, 0132-0165, 0197-0206, figures 5, 7, 9 | 1-8, 16-23 |
| X | CN 110945929 A (BEIJING XIAOMI MOBILE SOFTWARE CO., LTD.) 31 March 2020 (2020-03-31)<br>    description paragraphs 0086-0184, figures 1A-14 | 9-13, 24-28 |
| X | CN 110636579 A (HUAWEI TECHNOLOGIES CO., LTD.) 31 December 2019 (2019-12-31)<br>    description paragraphs 0268-0296 | 14-15, 29-30 |
| A | WO 2020025121 A1 (NOKIA TECHNOLOGIES OY) 06 February 2020 (2020-02-06)<br>    entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2021** | **26 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/119320** |

**Box No. III      Observations where unity of invention is lacking (Continuation of item 3 of first sheet)**

This International Searching Authority found multiple inventions in this international application, as follows:

[1]    Independent claims 1, 5, 16 and 20 relate to a method for selecting cell and a communication device.

[2]    Independent claims 9 and 24 relate to a paging method and a communication device.

[3]    Independent claims 14 and 29 relate to a paging method and a communication device.

[4]    Said three groups of independent claims do not share a same or corresponding specific technical feature. They define three different inventions. Therefore, the present application do not satisfy the requirement of unity of invention under PCT Rule 13.1 and 13.2.

1.  ☐  As all required additional search fees were timely paid by the applicant, this international search report covers all searchable claims.

2.  ☑  As all searchable claims could be searched without effort justifying additional fees, this Authority did not invite payment of additional fees.

3.  ☐  As only some of the required additional search fees were timely paid by the applicant, this international search report covers only those claims for which fees were paid, specifically claims Nos.:

4.  ☐  No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**
**Information on patent family members**

International application No.

**PCT/CN2020/119320**

| Patent document cited in search report | | | Publication date (day/month/year) | Patent family member(s) | | | Publication date (day/month/year) |
|---|---|---|---|---|---|---|---|
| CN | 108024297 | A | 11 May 2018 | TW | 201818742 | A | 16 May 2018 |
| | | | | US | 2018124661 | A1 | 03 May 2018 |
| CN | 110945929 | A | 31 March 2020 | None | | | |
| CN | 110636579 | A | 31 December 2019 | WO | 2019242724 | A1 | 26 December 2019 |
| | | | | EP | 3787342 | A1 | 03 March 2021 |
| WO | 2020025121 | A1 | 06 February 2020 | None | | | |

Form PCT/ISA/210 (patent family annex) (January 2015)